Europäisches Patentamt

European Patent Office

Office européen des brevets

(19)

(11) Publication number: **0 222 197 B1**

(12) **EUROPEAN PATENT SPECIFICATION**

(45) Date of publication of patent specification: **06.05.92**   (51) Int. Cl.⁵: **G07B** 17/02, G06F 11/16

(21) Application number: **86114320.4**

(22) Date of filing: **16.10.86**

Divisional application 91107126.4 filed on 16/10/86.

(54) **Systems for non-volatile storage of data and postage meter systems.**

(30) Priority: **16.10.85 US 788171**
**16.10.85 US 788172**
**16.10.85 US 787877**

(43) Date of publication of application:
**20.05.87 Bulletin 87/21**

(45) Publication of the grant of the patent:
**06.05.92 Bulletin 92/19**

(84) Designated Contracting States:
**CH DE FR GB LI**

(56) References cited:
**EP-A- 0 085 385**
**EP-A- 0 173 249**
**WO-A-84/02409**
**US-A- 4 301 507**
**US-A- 4 484 307**

(73) Proprietor: **PITNEY BOWES INC.**
**One Elmcroft**
**Stamford Connecticut 06926-0790(US)**

(72) Inventor: **Kroll, Paul C.**
**12 Carmen Hill No. 2**
**New Milford, CT 06776(US)**
Inventor: **Chang, Sung S.**
**260 Glenbrook Road**
**Stamford, CT 06906(US)**

(74) Representative: **Lehn, Werner, Dipl.-Ing. et al**
**Hoffmann, Eitle & Partner Patentanwälte Arabellastrasse 4**
**W-8000 München 81(DE)**

Rank Xerox (UK) Business Services
(3.08/2.19/2.0)

## Description

The present invention relates to systems for non-volatile storage of data and to electronic postage meter systems having non-volatile memory.

Postage meters are mass-produced devices for printing a defined unit value for governmental or private carrier delivery of parcels and envelopes. The term "postage meter" also includes other like devices which provide unit value printing, such as tax stamp meters. Postage meters include internal accounting devices which account for postage value representation which is stored within the meter. The accounting device accounts for both the recharging of the meter with additional postage value and the printing of postage by the meter printing mechanism. No external independent accounting system is available for accounting for the postage printed by the meter. Accordingly, postage meters must possess a high reliability to avoid the loss of user or governmental funds stored within the meter and dispensed by printing postage.

Electronic postage meter have been developed and are disclosed, for example, in U.S. Patent No. 3,978,457 for MICROCOMPUTERIZED ELECTRONIC POSTAGE METER SYSTEM; in U.S. Patent No. 4,301,507 for ELECTRONIC POSTAGE METER HAVING PLURAL COMPUTING SYSTEMS; and in U.S. Patent No. 4,484,307, for ELECTRONIC POSTAGE METER HAVING IMPROVED SECURITY AND FAULT TOLERANCE FEATURES. Such meters have electronic accounting circuits which include electronic non-volatile memory capability for storing postage accounting information The accounting circuits and associated postage printing mechanism are physically sealed within a tamper resistant enclosure. The non-volatile memories are provided for storing critical postage accounting information when external operating power is not applied to the meter.

Various types of accounting information may be stored in the meter non-volatile memory. This information includes, for example, the total amount of postage remaining in the meter for subsequent printing (descending register) and the total amount of postage printed by the meter (ascending register). Other types of accounting or operating data may also be stored. For example, service information in the form of error codes denoting various types of malfunctions or abnormal conditions encountered during operation of the meter may be stored in non-volatile memories. This facilitates the evaluation of the operating experience of each meter to assist in its repair, should that be necessary, and to accumulate data helpful in the design of electronic postage meters.

Non-volatile memories as well as the other electronic accounting circuitry within electronic postage meters are susceptible to disturbances which can either destroy information or cause erroneous information to be generated. The electronic circuits are susceptible to electromagnetic radiation and electrical transients which can interfere with the proper operation of the meter and accurate storage of information. These types of effects can result in a loss of funds to the users and, accordingly, it has been recognized that various types of protection must be provided to avoid such undesirable results as the data cannot be reconstructed in most instances from other externally available records.

Electronic postage meters of the type that write to nonvolatile memories only during power down sequence such as disclosed in above identified U.S. Patents 4,301,507, operates satisfactorily for their intended purposes. However, if a difficulty occurs during the several millisecond when external power is removed and the capacitance within the system provides the power to write, critical accounting information may be lost. This information may not be able to be reconstructed because it is not stored in other nonvolatile memories.

Systems have also been developed, such as disclosed in U.S. Patent No. 4,484,307 for ELECTRONIC POSTAGE METER HAVING IMPROVED SECURITY AND FAULT TOLERANCE FEATURES, and published European Patent Application No. 0 085 385 for MICROPROCESSOR SYSTEMS FOR ELECTRONIC POSTAGE METERS which have memories wherein data is written into nonvolatile memories during each operation of the meter. Other electronic postage meter systems, such as disclosed in EP-A-0 173 249 entitled NONVOLATILE MEMORY SYSTEM WITH REAL TIME AND POWER DOWN DATA STORATE CAPABILITY FOR AN ELECTRONIC POSTAGE METER (a document within the meaning of Art. 54(3)(4) EPC) employ dual nonvolatile memories, one wherein data is written during each operation of the meter and another wherein data is written only during a power down sequence.

It has been discovered that electronic systems such as described above can be improved by an improved circuit and software arrangement which may employ plural memories.

The organization of the system is such that information is written into two dissimilar memories, under predetermined operating conditions and in a manner which enhances the reliability of the system.

According to one aspect of the invention, there is provided a system for the non-volatile storage of data, comprising: a microcomputer means; a first non-volatile memory having data terminals connected to said microcomputer means for having data written into said first non-volatile memory by said microcomputer means, said first non-volatile memory being of a type requiring data to be applied to said first non-volatile memory data terminals for more than a predetermined time for data to be written into said first non-volatile memory; a second non-volatile memory having data terminals connected to said microcomputer means for having data written into said second non-volatile memory, said second non-volatile memory being of a type wherein a time less than said predetermined time is a sufficient time for data applied to said second non-volatile memory to be written into said second non-volatile memory; and program store means coupled to said microcomputer means for controlling the operation of said microcomputer means to apply, for at least said predetermined time, data to said first non-volatile memory data terminals for writing data into said first non-volatile memory and during said predetermined time to apply data to said second non-volatile memory data terminals.

According to another aspect of the invention, there is provided a postage meter system of the type having a microcomputer means with first and second non-volatile memory means coupled thereto for the storage of postage meter accounting data, comprising: said first non-volatile memory means having data terminals connected to said microcomputer means for data to be applied to said first non-volatile memory means data terminals for more than a predetermined time for data to be written into said non-volatile memory means; said second non-volatile memory means having data terminals connected to said microcomputer means for having data written into said second non-volatile memory means, said second non-volatile memory means being of a type wherein a time less than said predetermined time is a sufficient time for data applied to said second non-volatile memory means to be written into said second non-volatile memory means; and a program store means coupled to said microcomputer means for controlling the operation of said microcomputer means to apply, for at least said predetermined time, postage accounting data to said first non-volatile memory means data terminals and during said predetermined time while data is applied to said first non-volatile memory means data terminals, to apply postage meter accounting data to said second non-volatile memory means data terminals.

For a better understanding of the invention, and to show how the same may be carried into effect, reference will now be made, by way of example, to the accompanying drawings, in which:-

Figure 1 is a simplified perspective view of a postal meter showing a simplified diagram of a circuit for the accounting system of the meter in accordance with an embodiment of the invention;

Figure 2 is a detailed schematic circuit diagram of the accounting system shown in Fig. 1;

Figure 3 is a flow chart of the accounting module main line loop;

Figure 4 is a flow chart showing the accounting module trip processing;

Figure 5 is a flow chart showing the nonvolatile memory block write routine;

Figure 6 is a flow chart showing the power down processing routine;

Figure 7 is a flow chart showing the load normal block data routine;

Figure 8 is a flow chart showing the load service block data from the MNOS or EEPROM memories;

Figure 9 is a flow chart showing computing trip record address routine;

Figure 10 is a flow chart showing find current trip record routine;

Figure 11 is a flow chart showing read first portion of current primary trip record routine,

Figure 12 is a flow chart showing the trip record verification routine;

Figure 13 is a flow chart showing trip record error logging routine;

Figure 14 is a flow chart showing set postage on print wheels routine;

Figure 15 is a flow chart showing find current postage record routine;

Figure 16 is a flow chart showing repair trip record routine;

Figure 17 is a flow chart showing open non-volatile memory block routine; and,

Figure 18 is a flow chart showing update non-volatile memory block routine.

Detailed Description of the Preferred Embodiment

Circuit Architecture Overview

In the present system both a floating gate EEPROM type nonvolatile memory and an MNOS type nonvolatile memory are employed in conjunction with a microprocessor having a random access volatile memory. The random access memory, as in the present system, may reside on the integrated circuit chip which contains the microprocessor. The system is designed so that information from the microprocessor is both written into the random access memory and into the EEPROM memory on a transactional basis. The information is written into both the EEPROM memory and the MNOS nonvolatile memory during a power down routine. Additionally, writing can occur to both the EEPROM nonvolatile memory and the MNOS memory during block switching times, as for example, when the service mode switch is moved from the operating position to the service mode position.

A unique system of interleaving the writing between the EEPROM memory and the MNOS memory enables the data to be written into both memories during power down without extending the period of time necessary to write into either of the memories individually. This greatly enhances the reliability and security of the meter without additionally providing further risks that information may be lost during power down.

The writing technique is such that the writing is interleaved. That is, a byte of information is first written into the EEPROM memory. Since it takes two milliseconds for the information to be written into the EEPROM memory locations after the data is put on the EEPROM memory data line ports, this time period is used for writing two nibbles of data into the MNOS memory. This memory is nibble oriented and the writing time takes one millisecond per nibble. Thus, during the wait period while the data is being written into the EEPROM nonvolatile memory the same data is simultaneously being written into the MNOS type nonvolatile memory. The interleaving continues until both memories are fully loaded with the relevant data necessary to be stored during a power down sequence.

The above writing sequence for the particular design involved may take approximately 60 to 70 milliseconds while the power from the capacitance store which is available for continued operation of the meter after a power failure is detected is in the range of 200 milliseconds.

As a further protection because of the necessity for the particular circuit disclosed to output a 16 bit address at port 2 of the microprocessor, here on 8051 type microprocessor, when writing to the EEPROM nonvolatile memory, and since the MNOS memory is also connected to port 2 of the 8051 microprocessor, the addressing scheme for the EEPROM memory has been selected such that the data lines coupled to the MNOS memory always are at a high, or one value, whenever the EEPROM memory is addressed for the purpose of either writing or reading. This is of a particular importance in protecting the data in the MNOS memory because of the manner in which writing must occur in this memory. It should be noted that to write into the MNOS nonvolatile memory it is necessary to first erase the 4 bit locations to be written into. To achieve this, it is necessary to write ones (1) into each of the memory locations and this must be done for a period to time of approximately 10 milliseconds to erase the location and therefore enable a later write to occur. As a result of this arrangement for the data input, the data lines of the MNOS memory are connected in a unique manner, specifically, to different pins of the same port as the high order address lines of the EEPROM memory.

With the data lines of the MNOS memory held high for a period of approximately 2 milliseconds when the EEPROM memory is being addressed, the MNOS memory is put into a condition wherein inadvertent writing into memory location is prevented. This is because should the write enable line inadvertently be activated during this period of time, the memory locations with a 1 in them would not change since a 1 is being written in. On the other hand memory locations with a 0 would also not be changed because they had not previously been erased and made a 1 to enable the writing step to occur. Additionally, the erasing process cannot occur because it takes approximately 10 milliseconds to erase a location to enable the memory location to be written into the EEPROM addressing timing is only 2 milliseconds.

As a further feature of the present organization it should be noted that the circuit organization and architecture is such that minimal lines are shared between the EEPROM nonvolatile memory and the MNOS nonvolatile memory. This provides a high degree of "separation" and a level of protection. Physically the two memory devices share only 10 I/O lines of the microcontroller. For the MNOS memory, all 10 shared lines are used only for latching the address. The control lines such as chip enable, read enable, write enable, and the like, are totally separated between the two chips. Such separation can help in reducing any possible mutual interference.

Software Architecture Overview

The software operating the system and the memory mapping arrangement for storing data, particularly in the EEPROM memory, provide a high degree of redundancy hither to unavailable in previous electronic postage meters. It has been discovered that by organizing the real time accounting into two sets of 20 records in the EEPROM memory in a unique manner, additional reliability can be achieved. Firstly, in the unlikely event a particular memory component is unavailable, the software architecture has been established so that it can function with either the nonvolatile MNOS nonvolatile memory present or removed from the system. Moreover, the addressing technique for writing into the EEPROM memory has eliminated the need for a separate pointer used in previous designs. Specifically, it has been discovered that data from the piece counter can be used in the header of the records stored in the EEPROM memory as a logical record pointer indicating where the record should be written after a trip has occurred. In the particular embodiment disclosed, it is the last, least significant 5 bits of the piece counter which provides the logical pointer for the record into which the data should be written.

Moreover, it has been discovered by placing the piece counting data into the header of each record quick identification can be achieved of the most current record stored in the EEPROM memory without the necessity, as in previous systems, of writing header location information twice per trip, once to indicate new records and once to indicate old records. Moreover, the technique allows the rapid access of desired records by a technique which permits a quick search and identification of desired information. The organization of the memory is such that there are two sets of twenty records stored in the EEPROM memory. When the meter is put into service, the memory locations are initialized so that proper data is stored in all memory locations. The use of the piece count data in the header of each record set allows a quick indication of both the oldest and most current (previous) records stored. The most current stored record includes the oldest piece count number which is updated only after a trip has been completed.

In the above manner, in conjunction with information concerning the setting of the postage value in a ring buffer stored in nonvolatile memory, which data is stored prior to the commencement of a trip, should any malfunction occur reconstruction using the ring buffer postage setting data and the most current (previous) record allows a recovery from the fault by using the postage value ring buffer setting to update records. This avoids the necessity to pull meters out of service due to the inability to recover from a single "bad trip". That is, a meter operation where data concerning the trip is not accurately recorded. As an additional feature in the memory organization, error counter information is maintained for a number of separate error conditions. This allows enhanced analysis of failure and fault conditions which may occur in the meter when the memory contents are read and analyzed.

It should be noted that the two sets of twenty records are designed so that the primary record has full data. That is the record contains a nonvolatile memory write soft error counter or pointer to remap record; a closing counter (write on next trip); a piece counter; a CRC of descending register; descending register; CRC of ascending register; ascending register; CRC of data from the byte 2 to byte 10 hex, this provides a CRC for insuring that the critical data is correct; postage value setting; batch amount; batch count; PIN number (for parcel registers only); printer status when trip bit is cleared, i.e. this byte is written only when the trip is completed; and, lastly, a CRC from data from bytes 2 to byte 1C hex which is the CRC of the entire record. In sharp contrast, the back up trip record contains abbreviated information of critical accounting data specifically the information stored from byte 2 to byte 10 hex mentioned above. Additionally, as a technique for providing enhanced security a nonvolatile memory write soft error counter or pointer to a remapped record is written in the backup record although not at the time of the transaction or trip. It is an error counter which is written into only when an error is detected and written into memory. This is the same case for the main record.

The software functions such that the accounting microprocessor verifies critical data of both trip records stored in the EEPROM and rewrites them if necessary. Specifically after a trip is completed the current critical data resides in three locations in the meter. A first set of critical data is stored in the microprocessor RAM, a second full set of critical data is stored in the EEPROM memory and a third set of abbreviated critical data is stored also in the EEPROM memory. If upon the comparison (wherein the data in the RAM is used as the accurate reference data) an error is detected, a rewrite step occurs. That is, data is rewritten into the EEPROM memory and thereafter compared to insure it matches the data stored in the RAM. This is done both for the full record stored in the EEPROM and the abbreviated data stored in the EEPROM. It should be noted that the full record of the EEPROM memory is not compared; only the critical data portion of the full record is compared. If, after an error in the critical data is detected and a rewriting process has occurred successfully, a soft error counter is incremented to note the difficulty encountered in writing into the EEPROM memory.

Another major feature of the software is the remapping of the trip record. Specifically the EEPROM memory is organized such that there are 8 record locations saved in reserve. That is 4 record locations for the main full record and 4 record locations for the abbreviated record. These locations are normally not utilized in the operation of the meter. In the unlikely event a primary record location for either the full data or the abbreviated data occurs which can be a hardware failure such as a memory cell failure and the like, the system is designed to activate an unused set of record locations. This is done in conjunction with a pointing technique which remaps the primary location to the new activated secondary location. Thus, the reserve secondary location functions in the capacity of the primary locations when this occurs. This all occurs under software control and this error condition is noted by the soft error counter for the particular record location exceeding its maximum, which in the present instance is 9, or a rewrite attempt fails. Thus, a write fails and the second rewrite attempt additionally fails.

The software is further organized to allow an infrequent error or transient condition to occur and continue the meter in service, however, if the transient error occurs more frequently, the meter is permanently lock out. For example, if the microprocessor jumps inadvertently for some reason to an unused or spare location the meter will continue in service if such does not happen too frequently, for example only once every 10,000 meter trip cycles. Other errors can be treated in the same manner. This allows segregation of meters which have a severe but very transient error and those which have a severe but more frequent error which should be removed from service and corrected by setting a flag in the nonvolatile memory such that even if the error condition is removed the meter cannot be initialized by power down and power up.

Additional features are provided in the software system to enable an access to descending register stored in the nonvolatile memory locations from the keyboard and the ability to dump the contents of the transactional EEPROM memory without taking the meter out of service by an external device which communicates with the meter.

Reference is now made to the drawings wherein like reference numerals designate similar elements in the various views.

Circuit Operation

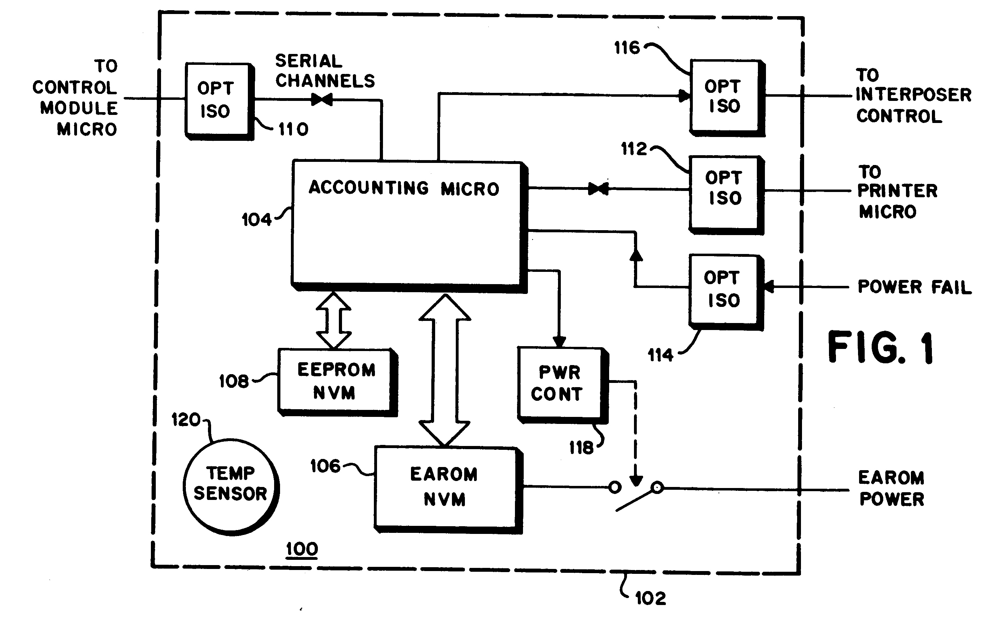

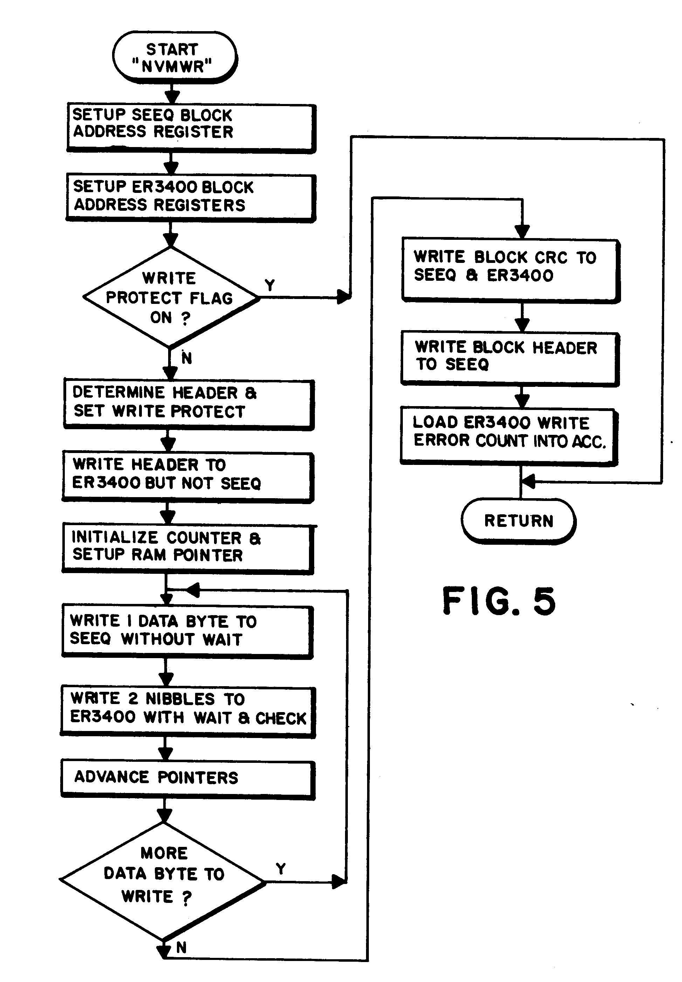

Reference is now made to Figure 1. An alternate form of an accounting control system for a postal meter is disclosed from that shown in Figure 5 of U.S. Patent No. 4,301,507 noted hereinabove. The accounting system 100 includes an enclosure 102, the walls of which may be formed to provide electromagnetic shielding. The circuits within the enclosure 102 include an accounting microcomputer 104 operatively connected to two nonvolatile memories. The first nonvolatile memory 106 is an EAROM MNOS type nonvolatile memory. The second nonvolatile memory 108 it an EEPROM nonvolatile memory. Nonvolatile memory 106 may, for example be an ER3400 manufactured by General Instruments Corporation, Hicksville, New York and described in "EAROM" published November 1977 by General Instruments Corporation and in Bulletin 1203A, "Using the ER3400" published by General Instruments Corporation. The second nonvolatile memory 108 may be a floating gate electrically erasable programmable read only memory, as for example, part number DE5516A manufactured by SEEQ Technology Incorporated, San Jose California and described in "2816A/5516A Timer $E^2$ 16K

Electrical Erasable ROMs", Preliminary Data Sheet, published February 1984 by SEEQ Technology Incorporated, San Jose, California.

The accounting microcomputer 104 controls the application of stored data to the two nonvolatile memories 106 and 108 in accordance with the present invention. The accounting microcomputer 104 includes a random access memory which includes working ascending registers, working descending registers and the like. The accounting microcomputer 104 also includes a read only memory control for the necessary routines which will be described in greater detail hereinafter.

The accounting system 100 incorporates a serial interface, to enable interfacing with the printing and control modules disclosed in the above noted U.S. Patent No. 4,301,507. The microcomputer, may for example, comprise an 8051, 8052 or 8751 type series microcomputer from Intel Corporation, Santa Clara, California. In order to avoid damage to the accounting system 100 by electrical surges applied accidentally or intentionally, and to eliminate electrical noise induced via ground loops, the accounting microcomputer 104 communicates with the devices external of the compartment 102 by suitable isolators that are not capable of applying voltage surges to the microcomputer. These isolators may, for example, be in the form of optoelectronic couplers, and are also preferably arranged so as to be inaccessible from the exterior or the postal meter. One isolator unit 110 may be provided for the two way communication path with the control unit. A further isolator arrangement 112 may be provided for the two way communication with the printer unit. A still further isolator 114 may be provided for applying the power sensing signal to the microcomputer 104. In addition, an isolator 116 may be provided for controlling an interposer in the printer for mechanically blocking function of the printer.

The purpose of the power control circuit 18 is to provide power to the system to enable a data transfer operation during power down operations to be completed when external power fails. The program of the microcomputing unit 104 is organized to enter the contents of the registers of the microcomputer and, as appropriate to random access memory, into the nonvolatile memories 106 and 108 as soon as an indication of failure of the power supply occurs, and to restore this data to the working registers upon restoration of power as will be more fully explained hereinafter.

The enclosure 102 may further include a temperature sensor 120, with suitable circuits, not shown, so that the microcomputer will operate to transfer data to the nonvolatile memory in the event of excess temperatures by entering a power failure mode if the temperature is above or below predetermined limits, as for example, 70°c or 0°c, respectively.

The system may prevent the operation of the meter interposer solenoid, not shown, by way of the isolator 116, in the event of excessive temperatures. It will be appreciated that the interposer is controlled by the microcomputer 104 also to inhibit operation of the printer in the event that insufficient postage remains for a printing operation, or other accounting data indicates that the meter should not be operative.

While the isolators have been indicated as individual units, it is, or course, apparent that these units may incorporate multiple devices, so that two way communications is established in the respective circuits.

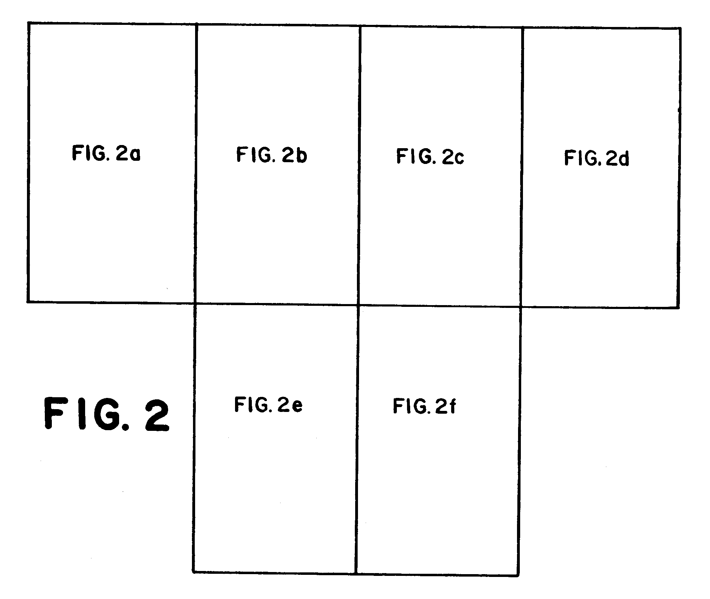

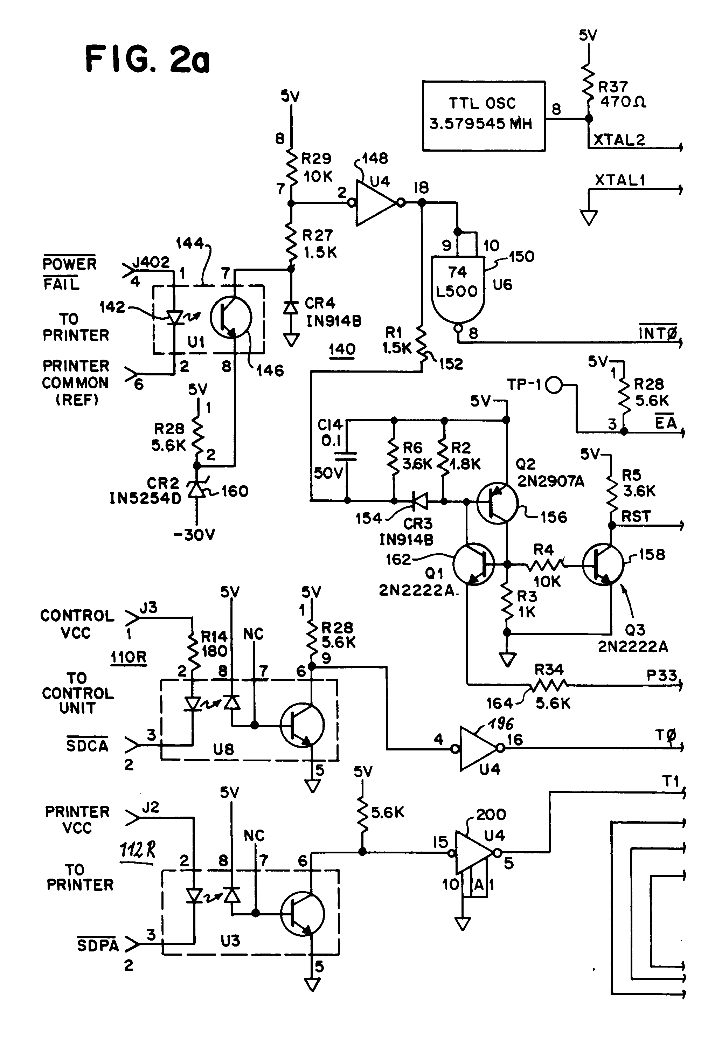

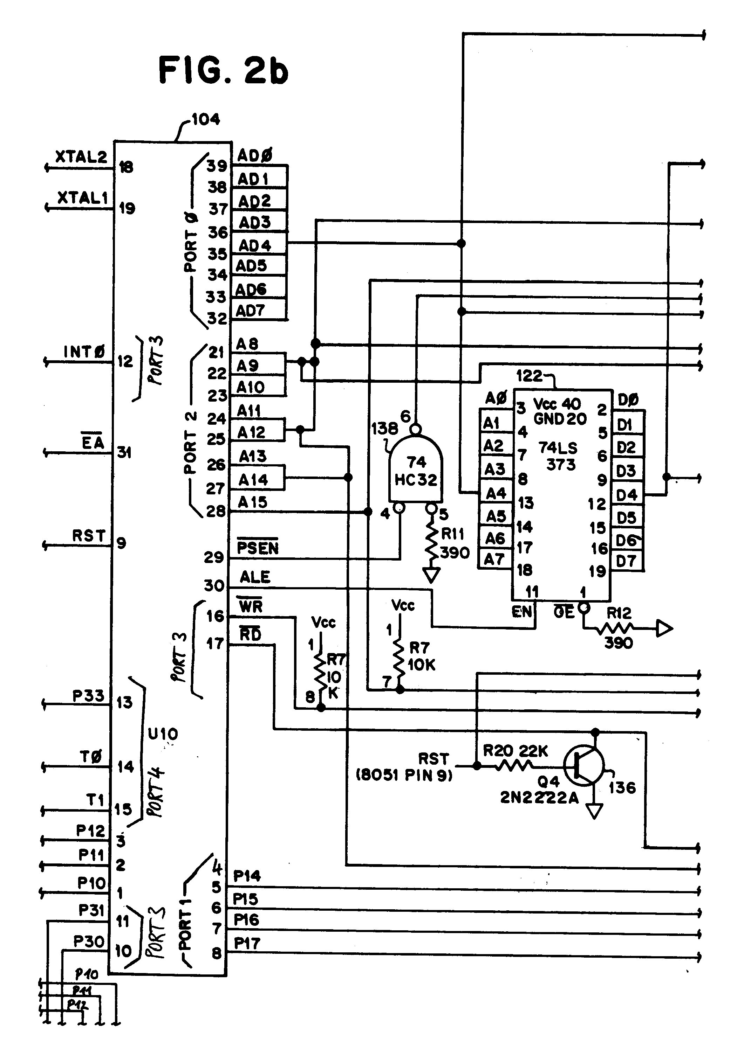

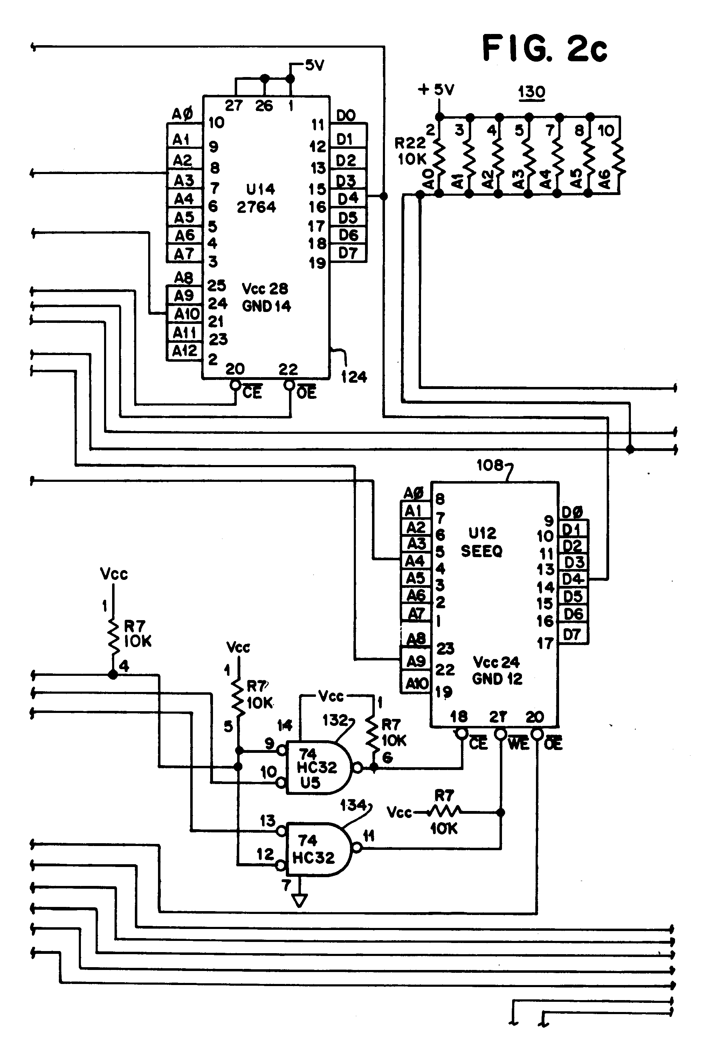

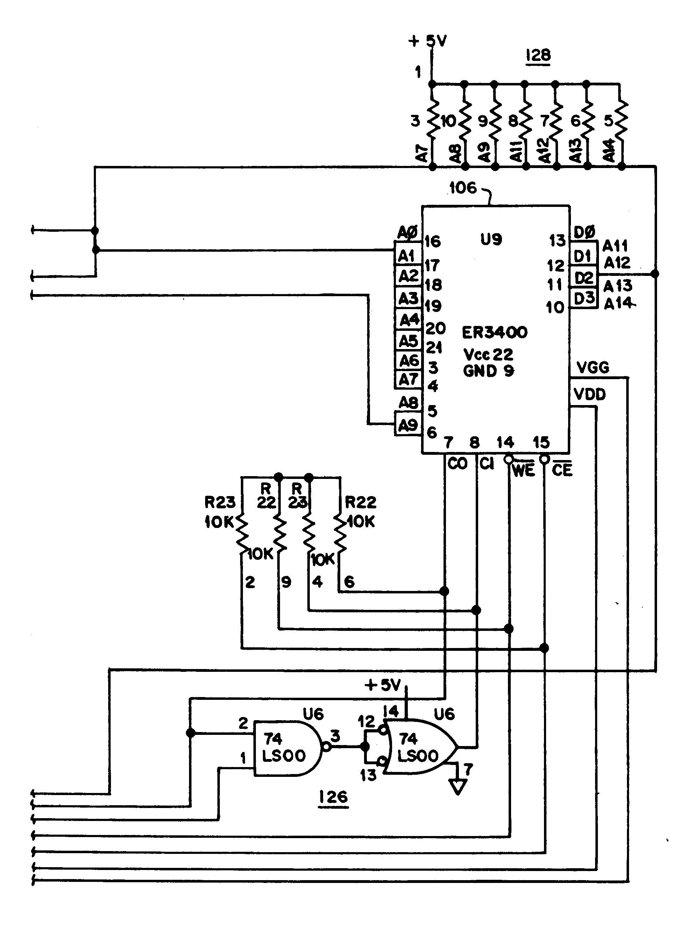

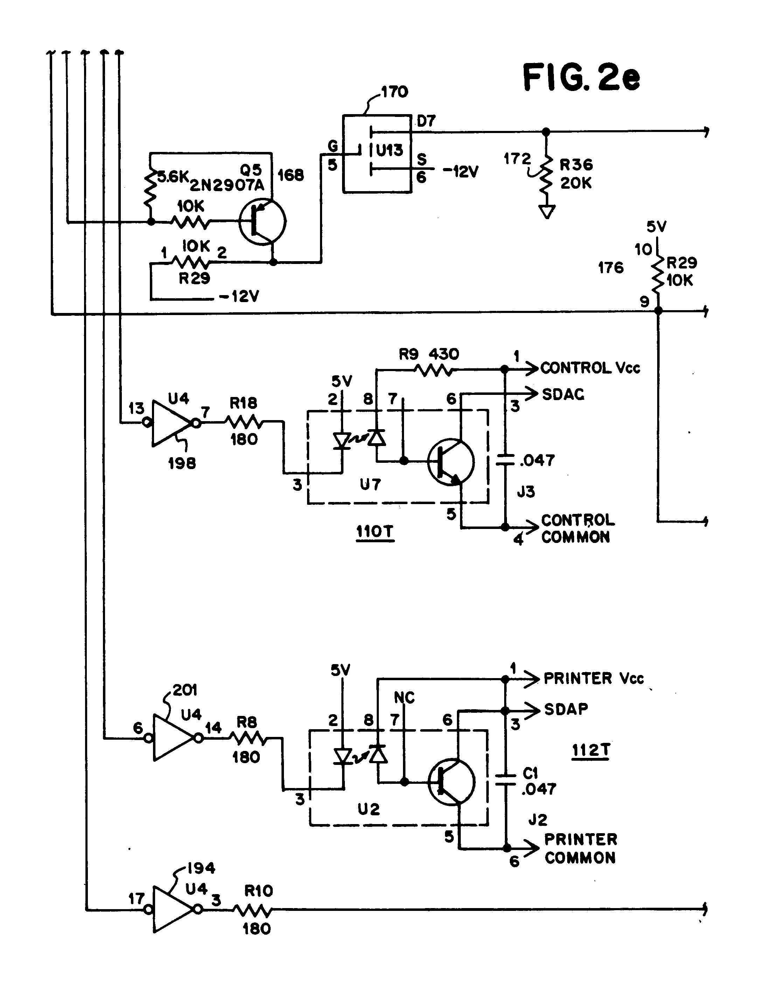

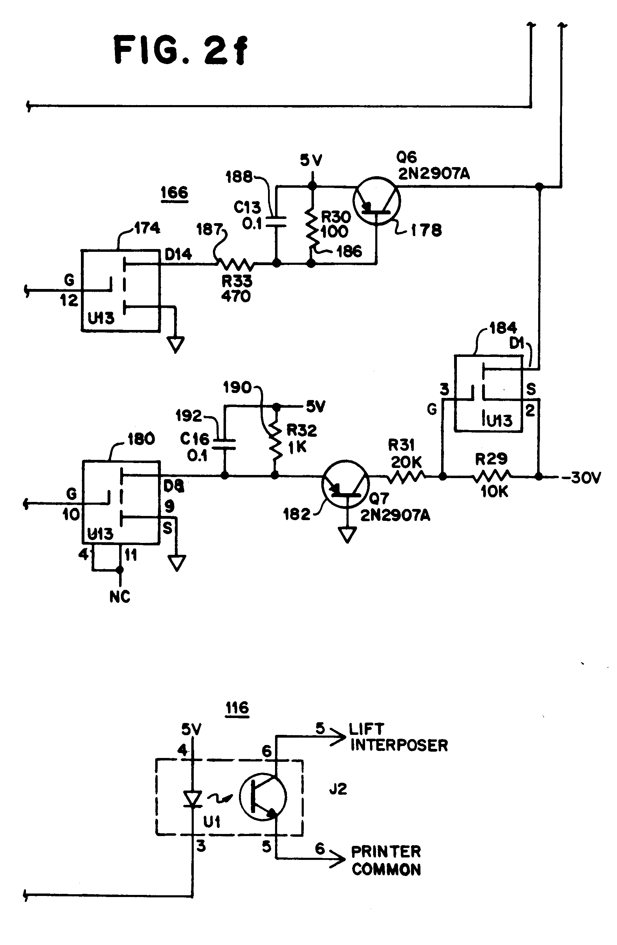

Reference is now made to Figure 2. The accounting microcomputer 104 is connected to the two nonvolatile memories 106 and 108. The address ports of the EEPROM nonvolatile memory 108 are connected to the microcomputer 104 by way of an address latch 122. The higher order address ports A8, A9 and A10 are coupled directly to port 2 of the microcomputer 104. The data lines of the nonvolatile memory 108 are connected directly to the port "0" of the microcomputer 104 and additionally to an external PROM 124. The PROM 124 can serve as an extra program memory capability for the meters accounting circuit or alternatively as the source of a diagnostic program for testing faults or failures of the meter. The MNOS nonvolatile memory 106 address lines A0 through A7 are directly connected to the microcomputer 104 port 0. The higher order address bits A8 and A9 are connected to port 2 of the microcomputer 104. The four byte data input/output ports D0 through D3 are directly coupled to port 2 of the microcomputer.

The nonvolatile memory 106 has two control lines C0 and C1 which establish the operation to be performed, namely, read, write, or erase; a write enable port; and, a chip enable port. The two ports are connected to the higher order 2 pins of the port I of the microcomputer 104. The control lines C0 and C1 are operated from port I of the microcomputer 104 by means of a block erase inhibit circuit 126. The address and data lines of the nonvolatile memory 106 are connected to the +5 volt power supply by a series of pull up resistors 128 and 130 respectively. The pull up resistors in conjunction with the +5 volt power supply insure than the high level voltage at each port is above a predetermined level, such as +3.6 volts, so that the high level is above the specified threshold for the device.

The nonvolatile memory 108 includes three control terminals, a chip enable terminal, a write enable terminal, and an output enable terminal which are coupled to the microcomputer 104. The chip enable and write enable line are connected to the microcomputer through a circuit which includes two negative logic AND gates 132 and 134. Each of these gates will provide a low output upon the occurrence of two low inputs at their respect two input terminals. The device 132 and 134 operate in conjunction with a NPN transistor 136 to protect the contents of the nonvolatile memory 108 upon the detection of the power fail of the operating voltage for the system. This circuitry operates in conjunction with circuitry within the nonvolatile memory to ensure that the nonvolatile memory 108 is in a known condition. When the operating voltage of the circuit falls below a predetermined level, but is yet above the level of voltage needed to cause the onboard protection circuitry of the memory 108 to become active which is 3 volts, the circuitry including devices 132, 134, and 136 provide suitable protection for the memory 108.

A negative AND gate 138 is provided for manufacturing testing purpose. One of the inputs to the gate 138 is connected to ground by a resistor to render the gate 138 essentially inoperative. When it is coupled to a high voltage, the negative ANDgate 138 functions to disable the device 124 data lines by rendering the output enable terminal of the device high.

A power fail and reset logic circuit 140 is provided. This circuitry functions to hold the microprocessor 104 in the reset mode until the voltages have risen sufficiently and stabilized. Additionally, on a power down occurrence when power fail is detected, the circuit functions to both insure that the reset signal is held off until an interrupt routine is initiated and completed. Thereafter, the circuit functions to insure positive application of a reset signal and the continued application of that signal as the power falls.

As power rises, and before the power rises to the level where it is stabilized, no current flows through the photodiode 142 of the opto-isolator 144. Thus, the opto-isolator output photo-transistor 146 is nonconductive. As a result, the output of the opto-isolator is maintained at a high level by the rising voltage at the +5 volt supply. This results in a hysteresis buffer 148 providing a high voltage output causing the NAND gate 150 to maintain an active signal on the interrupt terminal of the microcomputer 104. This causes no activity by the microprocessor because, as will be more explained below, the microprocessor is being maintained in the reset mode which overrides the interrupt signal. The high voltage at the output of the hysteresis buffer 148 is applied via a resistor 152 to back bias a diode 154 coupled to the base electrode of PNP transistor 156. This causes transistor 156 to be biased out of conduction which in turn causes NPN transistor 158 to be biased out of conduction. As a result, the reset terminal follows the voltage at the +5 volt power supply and is maintained active as power rises.

When power rises to a sufficient level and stabilizes, current begins to flow through the photodiode 142 and phototransistor 146 is biased into conduction. This causes the input voltage to the hysteresis buffer 148 to go low and its output, likewise, to go low. As a result, transistor 156 is biased into conduction causing transistor 158 to also be biased into conduction. This removes the reset signal from the microcomputer 104 and simultaneously removes the active interrupt signal applied by NAND gate 150.

When the phototransistor 146 is rendered nonconductive due either to a power fail detection signal which causes current to cease flowing through the photodiode 142 or a failure of the -30 volts applied causing the supply to rise toward ground, the interrupt line is rendered active. This occurs because the hysteresis buffer 148 has a high input applied resulting in a high output being applied to the NAND gate 150. As a consequence, a low output signal applied on the interrupt line and the microcomputer 104 under program control goes into an interrupt power down routine.

The microcomputer begins to operate under program control after the operating voltages reach their proper level and stabilize. The microcomputer continues to operate and execute main line meter program functions until a power fail occurs in either the input to the photodiode 142 where current ceases to flow or by a failure in the -30 volt supply coupled via the zener diode 160 to the emitter electrode of transistor 146. Either a failure of the power detect circuit or a rising voltage on the -30 volt supply causes phototransistor 146 to be biased out of conduction, biasing diode 154 out of conduction. Nevertheless, under program control, an NPN transistor 162 is maintained conductive until the necessary power down sequence has been completed. This occurs by having the emitter electrode of the transistor 162 connected through a resistor 164 to port 33 of microcomputer 104. Transistor 156 continues to be maintained in conduction by connecting the base electrode to ground through the collector emitter current path of transistor 162 and port 33 of the microcomputer 104. Transistor 158 is maintained in conduction until the power down routine is completed and the voltage at port 33 goes high biasing transistor 162 out of conduction. When this occurs, transistor 156 is biased out of conduction. As a result, transistor 158 is biased out of conduction and the reset signal is applied on the reset line. The microcomputer 104 goes into the reset mode and remains in the mode as power falls.

A sequence control circuit 166 is provided for controlling the sequence of application of operating voltages to the MNOS memory 106. The MNOS memory, to properly operate, requires the sequenced application of three separate voltages. This is controlled by the sequence control circuit 166. On power up, a +5 volt operating voltage is applied to MNOS terminal 22, not shown. It should be noted that the +5 volts is applied to all of the various devices as the $V_{cc}$ and is not shown on the schematic circuit diagram as such. The +5 volt is generated when the power to the system is turned on. Thereafter, a -12 volt is applied to MNOS memory 106 pin 2 $V_{dd}$. The -12 volts is applied by microcomputer 104 under software control. Specifically, port 30 goes low biasing PNP transistor 168 into conduction. As the voltage rises on the transistor collector electrode, a MOS FET transistor 170 is biased into conduction. As a result the -12 volts applied to the MOS FET source electrode is coupled via the device channel to the memory 106 terminal 2. A resistor 172 connects the terminal 2 to ground to provide a static discharge path and protect the device.

When the system is turned on, and while the -12 volts is being established at terminal 2 memory 106, a MOS field FET transistor 174 having its gate electrode connected to microcomputer port 31, is biased into conduction by the +5 volts applied via resistor 175 to its gate electrode. As a result, PNP transistor 178 is biased into conduction and a +5 volts is applied to memory 106 terminal 1, $V_{gg}$. This is because the ER3400 device requires the application of a +5 or a -30 volts on this particular terminal to avoid an undefined condition within the device which could adversely affect the memory operation, such as latch up which would prevent accessing memory locations. When the -12 volts has been applied to the MNOS nonvolatile memory 106 terminal 2, the +5 volts is removed from terminal 1 by microcomputer 104 causing port 31 to go low. The program control of microcomputer 104 will allow port 31 to change from its high condition to its low condition only after certain routines are completed to insure that it is desired to effectuate a write operation to MNOS nonvolatile memory 106 to change a memory location content. When this condition occurs, as previously noted, a port 31 goes low which biases MOS FET transistor 174 out of conduction, causing PNP transistor 178 to be biased out of conduction and thereby removing the application of the +5 volts from the memory port 31. Simultaneously, a MOS FET transistor 180 is biased out of conduction which in turn biases a PNP transistor 182 into conduction. When transistor 182 is rendered conductive, it in turn biases a MOS FET transistor 184 into conduction which results in the application of a -30 volts through the drain source electrode channel to MNOS nonvolatile memory 106 terminal 1. When this sequence has been completed, the microcomputer 104 is able to access and write into memory locations within the nonvolatile memory 106.

After a write operation has been completed, the port 31 is put in a high state and the FET MOS 184 is biased out of conduction removing the -30 volts and the PNP transistor 178 is biased into conduction applying the +5 volts to the terminal 1. Resistors 186 and 187 in conjunction with capacitor 188 coupled to transistor 178, and resistor 190 and capacitor 192 coupled to transistor 182 function to provide a hysteresis effect. The values of these components are selected such that both devices cannot be operative to apply voltages to the terminal at the same time. Thus, each device goes off removing its respective voltage from terminal 1 before the other device turns on to apply its voltage to terminal 1.

Communications between the printer microcomputer, control module microcomputer and interposer are by means of optical isolators in conjunction with a hysteresis buffer. Thus, the opto-isolator 116 is coupled by hysteresis buffer 194 to port 12 of microcomputer 104. It should be noted that this is a one way serial communication channel from the microcomputer 104 to the interposer control. The control module communications to the microcomputer is by way of opto-isolator 110R and hysteresis buffer 196 to the T0 terminal of microcomputer 104. Control module communications from microcomputer 104 is by way of hysteresis buffer 198 and opto-isolator 110T. Finally, communications from the printer microcomputer is by way of opto-isolator 112R and hysteresis buffer 200 with communications from microcomputer 104 to the printer microcomputer by way of hysteresis buffer 201 connected to port 11 and opto-isolator 112T.

It should be noted that the low order pins of microcomputer 104 port 2 are connected to the high order address pins of both nonvolatile MNOS memory 106 and EEPROM memory 108. The higher order pins of port 2 are used as the data ports of microcomputer 104 for nonvolatile memory MNOS 106. When the EEPROM 108 is accessed for writing or reading purposes, the microcomputer 104 must output a 16 bit address, the software selects the address of the EEPROM memory 108 in such a way that the data input pins of the memory 106 are at a high level. Consequently, if noise inadvertently occurs on the control lines (write enable, chip enable, C0 and C1) which would otherwise condition memory MNOS 106 to have data written into it, the memory is still protected against overwriting because writing a 1 to a 0 in the ER3400 type nonvolatile memory would not enable an overwriting of the data into a 1. For those locations where a 1 exists already, the writing has no effect.

Additionally, because of the particular architecture of the present system, a high degree of isolation exists between the circuitry employed for reading and writing into each of the nonvolatile memories 106 and 108. Specifically, only 10 address lines are shared between the two nonvolatile memories 106 and 108. Namely microcomputer 104 port 0 terminals P00 through P07 are shared by devices by memories 106 and 108 as well as external program memory 124. Additionally, port 2 terminals P20 and 21 (address A8 and 9) are connected to the high order address pins of the three memory devices 106, 108 and 124. Additionally in port 2, terminals A11, 12, 13, and 14 are connected to the data lines of nonvolatile memory 106. Finally, port 2 terminal A15 is coupled to control the chip enable lines of devices 108 and 124.

It should expressly be noted that when program from external program memory 124 is being utilized to control operation of the microcomputer 104 the particular systems configuration provides maximum protection for nonvolatile memory 106 in a manner similar to that provided when operating nonvolatile memory 108.

As will be further explained in connection with the description of the flow charts, the access to the nonvolatile memories 106 and 108 is accomplished by different microprocessor instructions. The access to the MNOS nonvolatile memory 106 is by input/output mapping techniques. In contrast, access to the EEPROM nonvolatile memory 108 is by memory mapping techniques. By utilizing two different accessing techniques which flows from the particular hardware architecture configuration rather than the inherent addressing and accessing techniques of the device themselves, further protection is provided against inadvertently accessing the wrong memory or a wrong address while executing rewrite instructions to a particular memory. Thus, it should be recognized that the two memories are not such accessed, as for example, by memory mapping each having different ranges where an inadvertent use of address in the wrong range could cause access to the wrong memory. Again, both memories are not accessed by input/output mapping where again a wrong input or output address instruction could access a wrong memory. This is because memory mapping access instructions activate microcomputer 104 write lines and read line (terminals 16 and 17). However these lines are connected only to EEPROM nonvolatile memory 108 and not to MNOS memory 106. The I/O map instructions are effectuated by the high order pins of port 1 of microcomputer 104 (terminals 5, 6, 7, and 8) which are only connected to the nonvolatile memory 106.

## Postage Meter Sequence of Operation

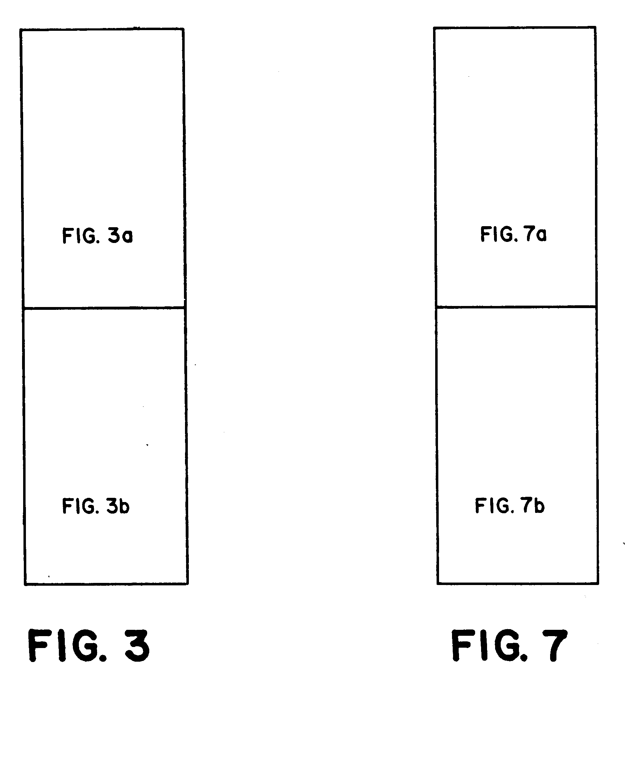

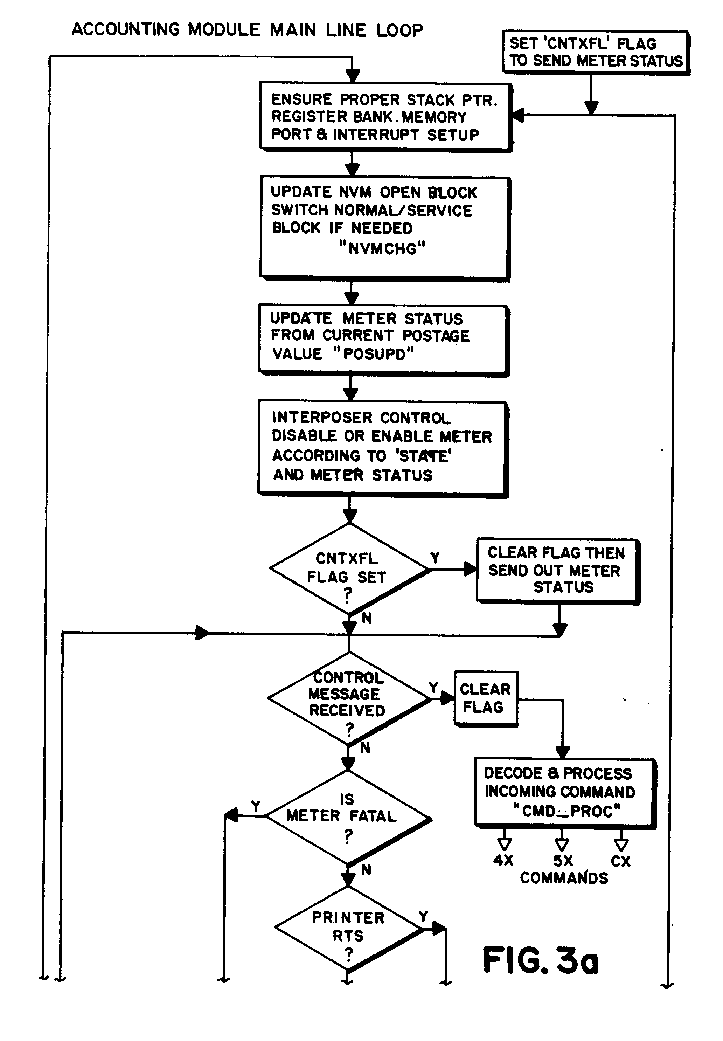

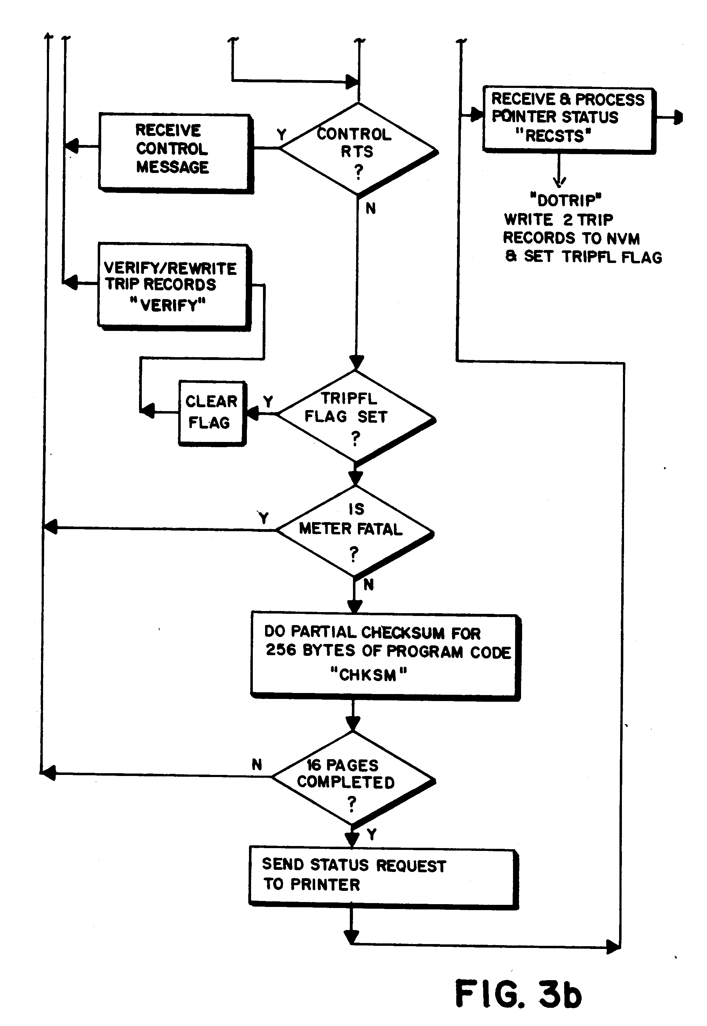

Figures 3 through 18 are flow charts representing the sequence of operation of the postage meter accounting system 100.

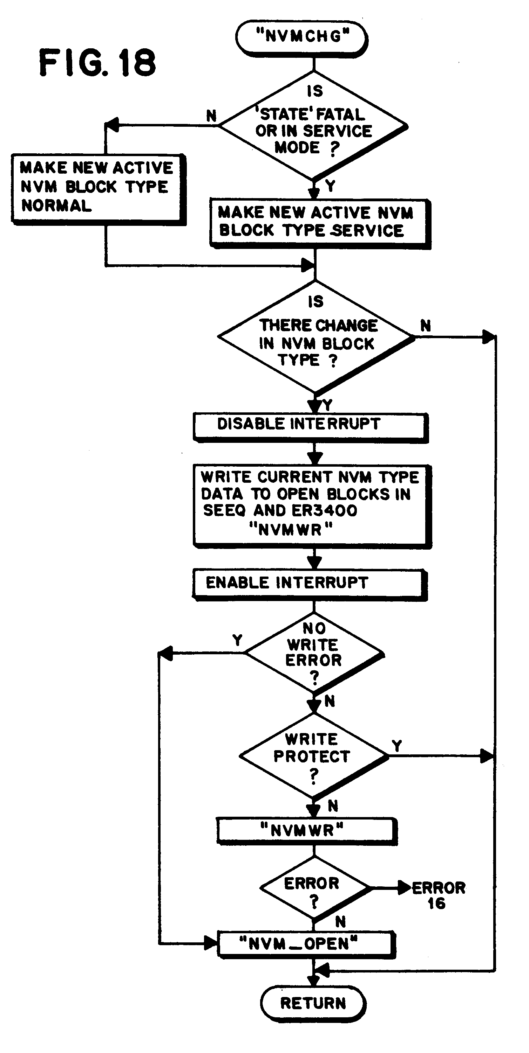

Reference is made to Figure 3, the accounting module main line loop. The flow chart depicts operation of the accounting unit 100 after the power up routine has been completed. It reflects the regular operation of the accounting module. It should be particularly noted that the operation involves receiving and processing the printer status and, in response thereto writing two trip records to the EEPROM memory 108. Additionally, when this occurs it sets a trip flag. When the operation of the microprocessor 104 is caused to loop back to the main line program loop and continues its processing it will reach a decision block concerning whether the trip flag has been set. If the trip flag has been set, it clears the flag and verifies/rewrite the trip records. Specifically, it verifies that the trip record was written correctly and if not correctly written, attempts to rewrite the data into the memory locations. It should be noted that the MNOS memory 106 is written into only during power down (see Figure 18). Additionally, the MNOS nonvolatile memory 106 is updated during a switching of the postage meter between its normal and service mode, should that occur.

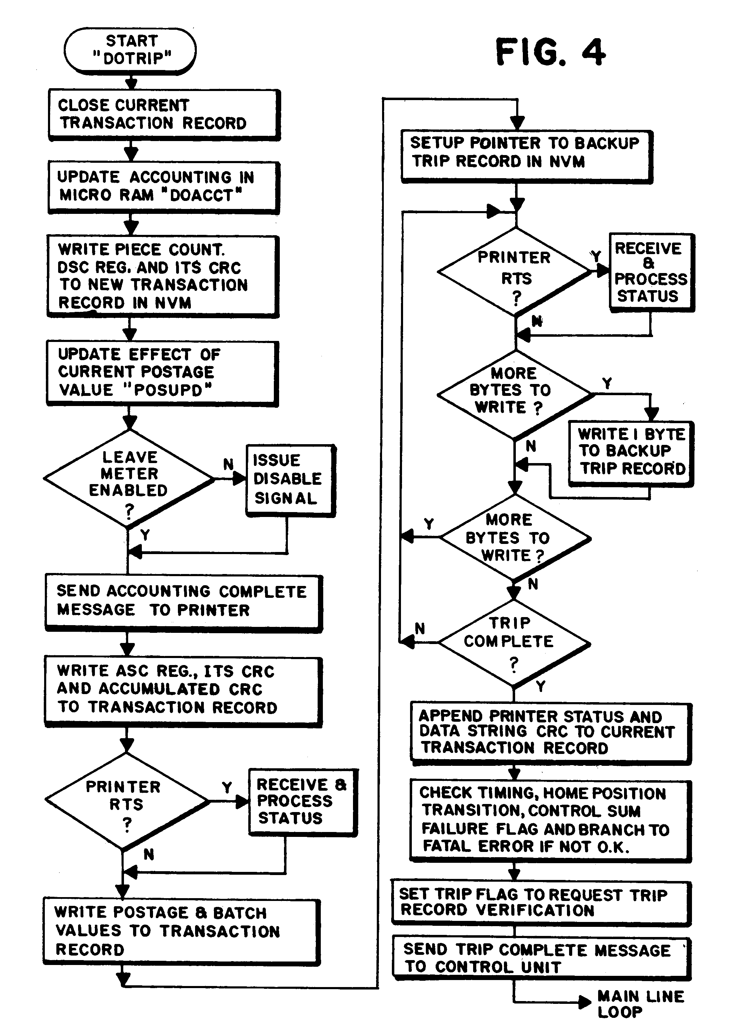

Reference is now made to Figure 4, the accounting module trip processing. The flow chart depicts the manner in which the writing to the EEPROM nonvolatile memory 108 is achieved.

When a postage imprint or dispensation is detected, the accounting microprocessor 104 performs, under the program control, the following tasks. It writes the right most two digits of the unincremented piece count (count of the number of pieces processed during an operation of the meter) as a "header" to "close" the previous transaction record. It also sets the trip flag in the meter status. Additionally, the microcomputer 104 updates the accounting data in the microprocessor RAM and performs a control sum test. The control sum is the sum of the ascending register and descending register of the postage meter which should equal the control sum.

Additionally, the microcomputer 104 writes portion of the current logical transaction record, which includes the piece count, the CRC of the descending register and the descending register value. A partial CRC for the data string is accumulated and stored in a temporary RAM location. The microcomputer 104 under program control sends the accounting complete message to the printer module. It further writes the CRC of the ascending register, the ascending register value and the CRC of the data string from the piece count to the ascending register. It goes to receive the process and new status if the printer module raises the request to send signal. The communications protocol for the various modules is described fully in the above noted U.S. Patent No. 4,301,507.

The microcomputer 104 writes to the current transaction record the postage value, batch amount, batch count and PIN (parcel identification number), if it is a parcel register rather than postage meter. It continues accumulating the data string CRC.

The program causes the microcomputer 104 to save the last memory address of the primary full trip record onto the stack. It proceeds to write the back up (or abbreviated) trip record in a byte by byte manner so that a request to send from the printer can be served immediately. After writing the back up trip record, the microcomputer 104 waits until the trip bit in the printer status is cleared, then retrieves, (pops) the memory address of the primary trip record from the stack and writes the new printer status and the CRC for the data string of the entire primary trip record. The microcomputer 104 checks the home position change and the synchronization between the home position and the piece count for an error code condition. This is to determine if the meter is operating properly. The microcomputer sets a trip flag which effectively requests later trip record verification. It then sends the meter status with trip completed bit set to the control unit. The trip bit will be cleared if the outgoing transmission is successful. After this is achieved, the program would return to the main line loop.

It should be noted that the postage value stored in each primary trip record is used only for reconstructing the postage fund in case a catastrophic memory failure occurs and the meter is taken out of service. It is used by the service department in analyzing the data dumped from a returned meter. During the power-up loading onto the temporary RAM, the postage value read from the primary trip record is overwritten by the postage setting value read from the postage ring buffer which always contains the current postage setting value. Thus, if the setting value is changed after a trip, the current setting rather than the last trip setting is loaded into microcomputer random access memory.

Reference is now made to Figure 5, the nonvolatile memory block write routine. The routine is called when it is desired to write into a block of the EEPROM nonvolatile memory 106 and MNOS nonvolatile memory 108. This occurs only during the power down of the module or when the meter mode is switched from the normal mode to the service mode by actuation of the service switch disclosed in U.S. Patent No. 4,301,507. It should be noted that the program causes the microcomputer 104 to write one data byte to the EEPROM nonvolatile memory 106 without waiting. It immediately writes two nibbles or four bits to the MNOS nonvolatile memory 108 with wait the check, that is, to read back and verify that the data desired to be written into the memory locations has in fact been written.

Since a power down interruption can occur at any time, it is possible that it may be required to write information into both nonvolatile memories 106 and 108 should a power interruption occur. To avoid the possibility that a write operation has occurred within the prior two milliseconds into the EEPROM nonvolatile memory 106, the nonvolatile memory block write routine has been arranged such that writing to the EEPROM nonvolatile memory 106 does not occur until the processing loop has operated for at least two milliseconds. Thus, the first write data to the EEPROM nonvolatile memory 106 occurs only after the writing of the header to MNOS nonvolatile memory 108. Since this is a two nibble header it takes more than two milliseconds to accomplish the write cycle.

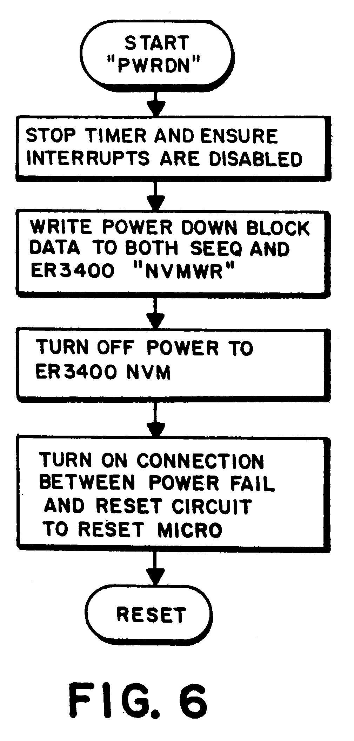

Reference is now made to Figure 6, the power down processing routine. The routine shows the processing of the accounting unit 100 when a power down situation is encountered. It should be noted that when the nonvolatile memory blocks are completely written the routine turns on the connection between the power fail and reset circuitry to the microcomputer 104 by causing microcomputer port 33 to go low to operate the circuitry as previously described.

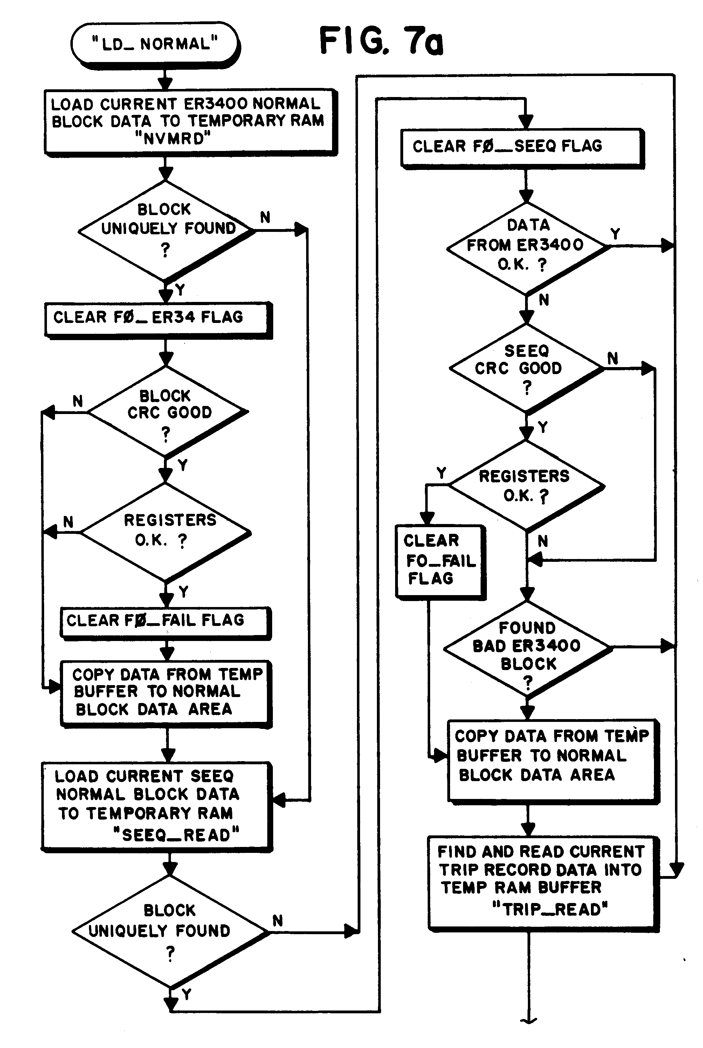

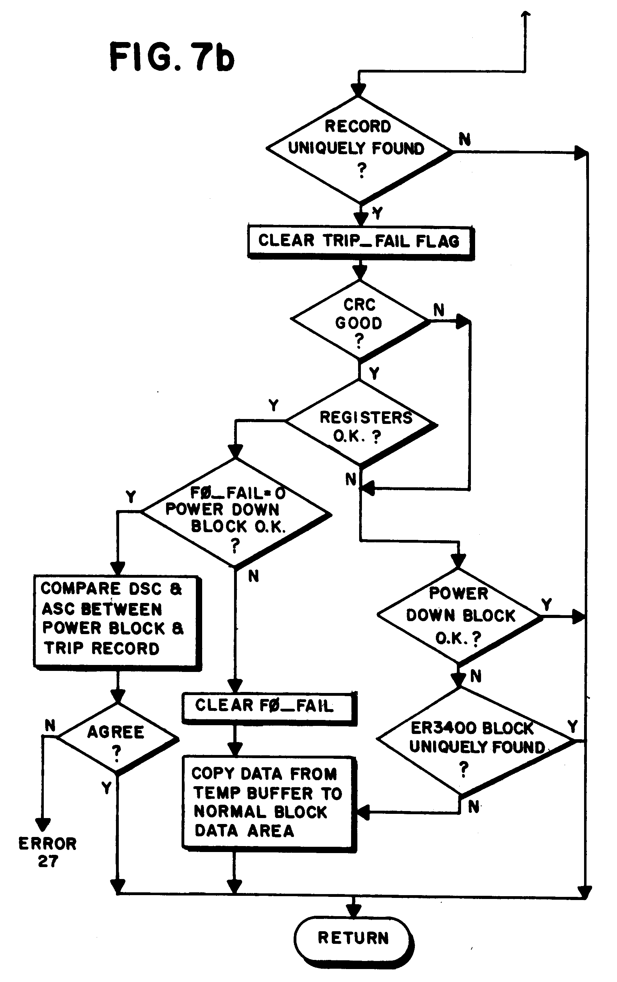

Reference is now made to Figure 7, the load normal block data routine. The routine describes the operation of the microcomputer 104 to transfer the data stored in the nonvolatile memories into the microcomputer random access memory. This occurs during the power up of the accounting unit 100. It should be noted that the source of data for the random access memory comes from several locations. The data comes from the normal block data in the MNOS memory 108 it also comes from the current EEPROM nonvolatile memory 106 normal block data and lastly, it comes for the current trip record data from the EEPROM nonvolatile memory 106. It should be noted that the data obtained from these three locations are compared to make sure that they are consistent. If the data is not consistent an error message is provided which causes the power up routine to be aborted. Until the condition is resolved the meter will no enable and cannot be utilized.

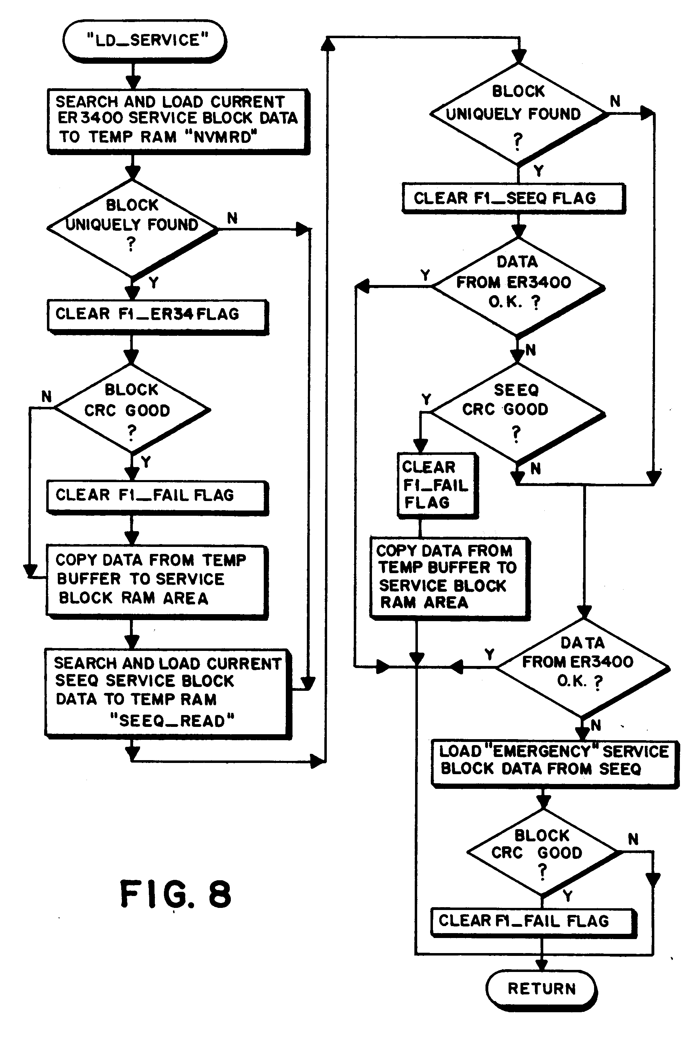

Reference is now made to Figure 8, the load service block data from MNOS or EEPROM memories. The service block data contains service and other meter related data needed to operate the meter such as the high dollar unlock, low postage warning and other similar types of information. The loading of the service block data operates in a manner similar to the loading of the normal block data; however, the comparison routines are not implemented due to the fact that this data is not as critical to meter operation as is the basic normal accounting information concerning postal funding.

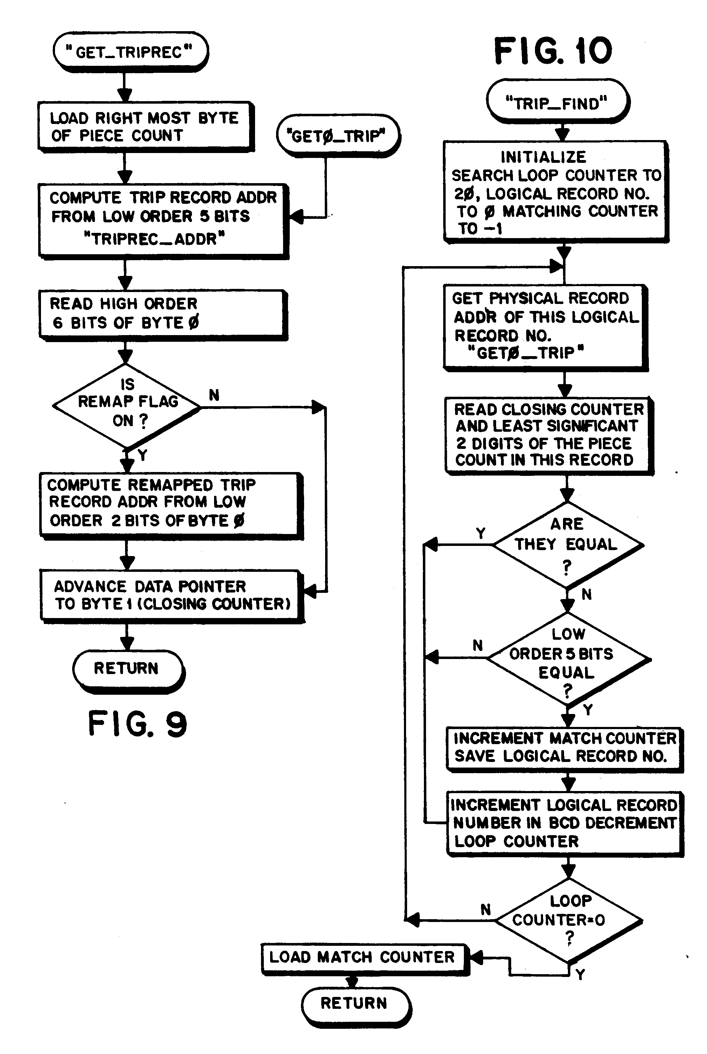

Reference is now made to Figure 9, the computing trip record address routine. This routine computes the trip record address for the EEPROM nonvolatile memory 108 so that the microcomputer 104 will write each trip into the proper location.

Reference is now made to Figure 10, the find current trip record routine. This routine provides the ability to locate the current trip record rapidly during the power up process or responding to a request of the descending register stored in the EEPROM nonvolatile memory 108. Normally, the current trip record has the highest piece count value. Instead of comparing the 8 digit piece count value among the 20 trip records retained in the nonvolatile memory 108, the routine compares the "header" against the least significant two digits of the piece count for each of the 20 trip records. The trip record headers were written in real time by the accounting module trip processing routine previously discussed for Figure 4. For the non-current trip records, the header value is equal to the piece count value modulo 100. For the current trip record, the header value is different by 20. This is because the header has not been updated and it still has the piece count value (modulo 100) for 20 transactions ago. Note that the current trip record is not identified by a header of a particular fixed value. In a fixed value header scheme, it is necessary to write the header twice, once when the record is current and secondly to change it to a different value to indicate that it is no longer current. This would cause the header locations to wear out before other data area in the nonvolatile memory with limited write cycle endurance. The technique described above avoids the difficulty.

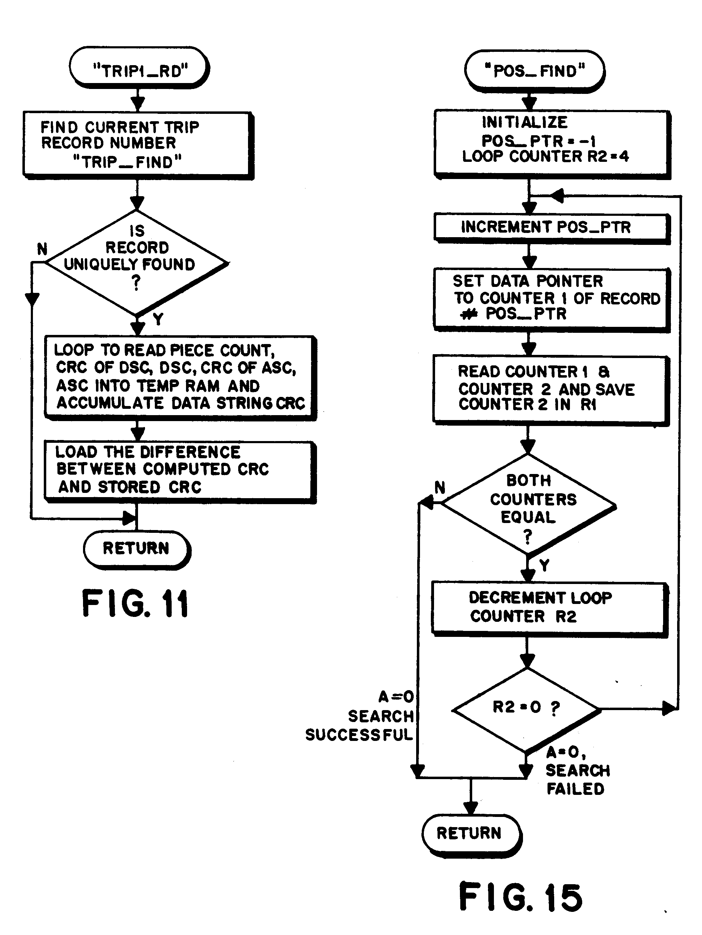

Reference is now made to Figure 11, read first portion of primary trip record routine. The routine is used to insure that the real time trip record is consistent with the normal block data stored during power up routine.

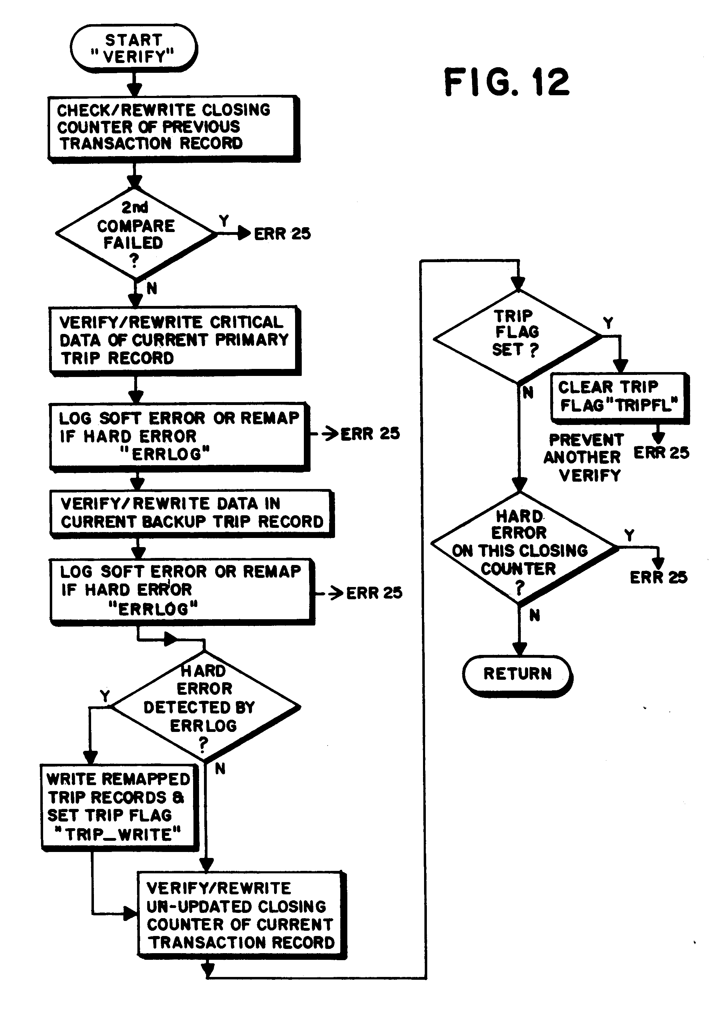

Reference is now made to Figure 12, trip record verificatin routine. This routine verifies the accuracy of the critical portions of the primary and back up trip record. The critical portions are the piece count ascending and descending register values. If it is determined upon the verification that a trip record is bad an attempt is made to rewrite the data into the same location. If this fails, the record is rendered inoperative and a new record is written in another location reserved for such contingencies. The location of the record is remapped to the reserved locations. The remapping can also occur even if the rewriting to the original location is successful but the number of attempts to achieve the correct data write is more than a predetermined number such as nine attempts.

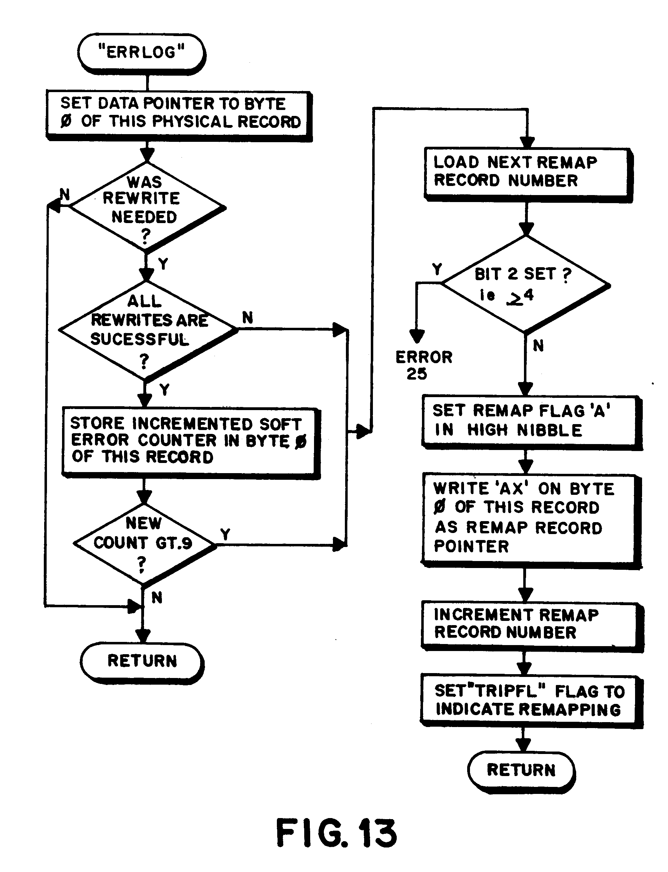

Reference is now made to Figure 13, trip record error logging routine. The routine determines whether a remap operation is necessary and sets a remap flag in the first nibble of the record to the remapped. It further provides an indication to where this record will be placed in memory.

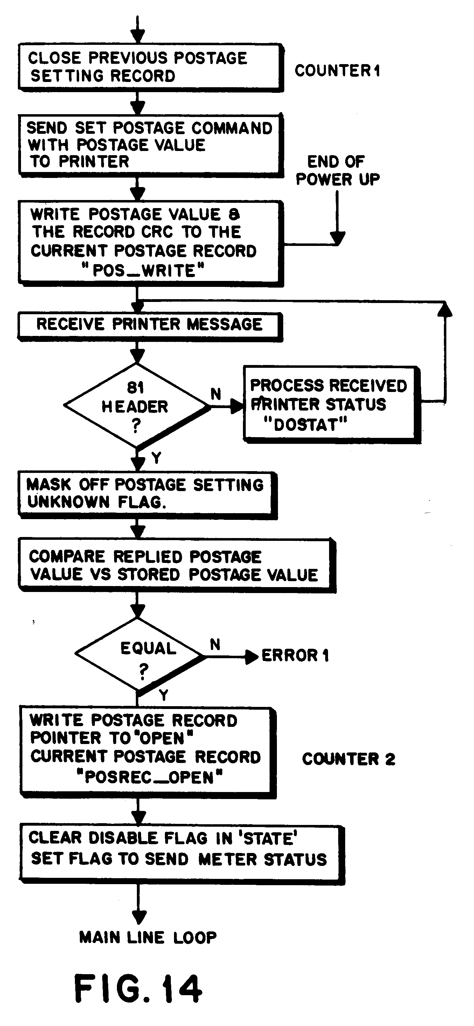

Reference is now made to Figure 14, set postage on print wheels routine. The routine provides a real time writing into the EEPROM nonvolatile memory 106 of the value of which the postage meter printing mechanism is set prior to actually tripping the meter. Specifically, the writing into this memory location occurs prior to enabling the meter for printing, that is, prior to the time at which the interposer is lifted so that the shutter bar of the meter printing mechanism can be operated to allow the printing mechanism to be caused to print. Thus, even if the power down interrupt routine malfunctions in some way, data is stored in the nonvolatile memory of the value to which the print wheels or other printing mechanism is set prior to commencement of the printing operation and accounting can be achieved on the next power up routine. The routine provides a protection against multiple failures in the system which would cause a loss of accounting data.

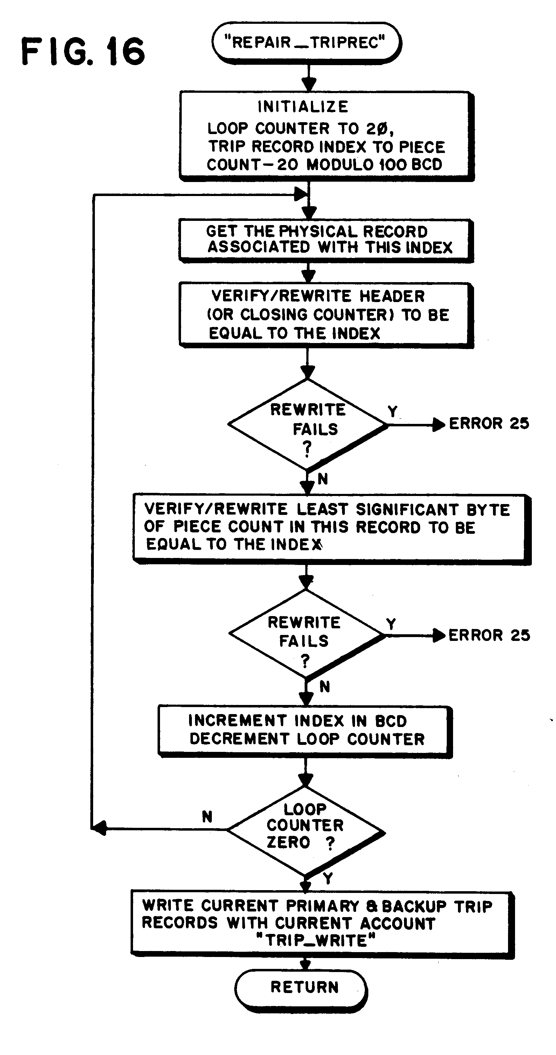

Reference is now made to Figure 15, find current postage record routine. The routine controls the microcomputer 104 during power up to find the current postage setting record last written before the meter became inoperative due for example to a power failure or to turning off the meter.

Reference is now made to Figure 16, repair trip record routine. If one cannot locate the current transaction record, that would indicate that there is some contamination of the header data and the piece count field. In such an event, the microprocessor under control of this sub-routine takes the regular normal power down block of piece count data to reconstruct the last record location for the EEPROM 108 trip record. It is done in a manner such that all twenty headers of the transaction records are rewritten to insure integrity of the repaired trip records. This routine can also be utilized when the serial number is locked into the meter after manufacturing and testing to set the piece counter to zero.

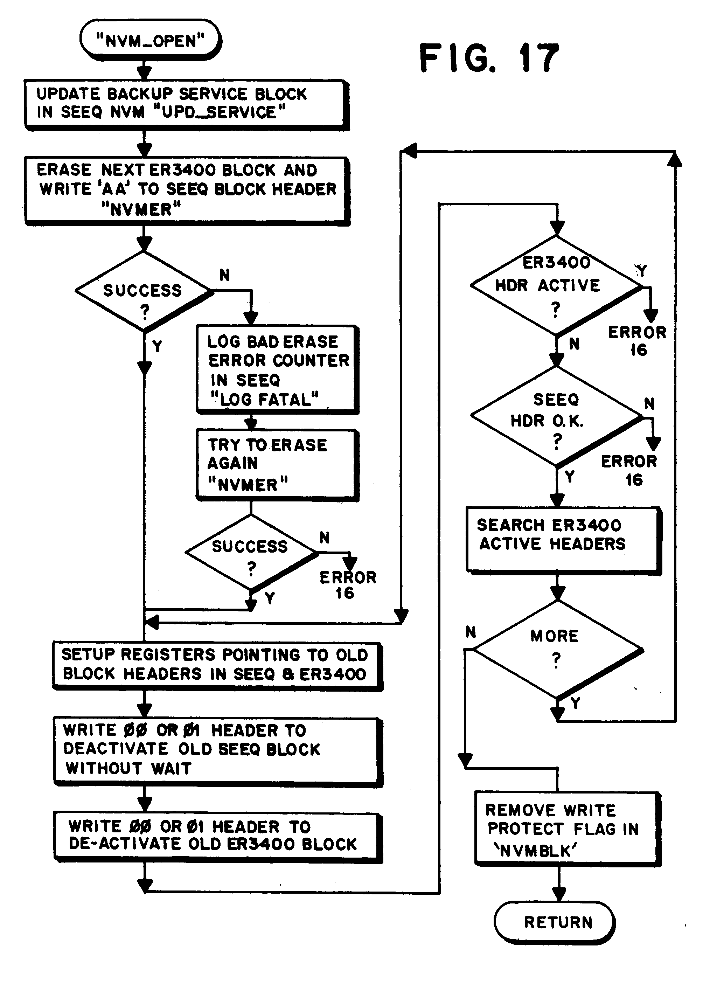

Reference is now made to Figure 17, open nonvolatile memory block routine. The program controls the use of a back up for emergency service block in the EEPROM nonvolatile memory 108. It is updated whenever a new MNOS nonvolatile memory block is open, and it can be uploaded if the regular service blocks in both nonvolatile memories 108 and 106 are lost or contaminated.

Reference is now made to Figure 18, update nonvolatile memory block routine. This routine controls the operation of the microcomputer 104 when the postage meter is changed between the normal mode of operation and the service mode of operation. The routine allows the microcomputer 104 to access only one of two types of blocks of data, normal accounting information or service information. The routine insures that both blocks of information are not simultaneously accessible by the microcomputer 104. This provides additional protection of the meter against the inadvertent loss of data and funds.

As can be seen from above the software causes the microcomputer to operate in a unique manner to achieve an enhanced reliability. The accounting microcomputer 104 writes two trip records to the EEPROM nonvolatile memory while the postage is being dispensed. Both records contain critical accounting data including piece count, ascending and descending registers, their CRC's and a data stream CRC. The primary records also contain less critical data such as postage selection value, batch count, batch amount, and the like. Accounting data of the most recent twenty transactions are always maintained within the EEPROM nonvolatile memory 108.

The accounting microcomputer 104 verifies critical data of both trip records and rewrites them if necessary. If the rewrite is successful, a nonvolatile memory write soft error counter in the EEPROM nonvolatile memory 108 for that physical record is incremented. If the rewrite fails or if the soft error count exceeds a maximum limit, the record will be redirected to one of the four reserved records. While a soft nonvolatile memory error is transparent to an observer, a redirection to a reserved record would bring the meter to a "fatal" mode with the new error code 25 and the meter is immediately disabled. The fatal condition can be removed only by powering down the meter and powering it up again. On the next power up, the meter will be locked out if there is no more reserved record available on either of the two trip record sets. At power down or block switching time, the microcomputer 104 writes either operational (normal) or service block data to both the EEPROM nonvolatile memory 108 and the MNOS nonvolatile memory 106. The microcomputer also keeps an "emergency service block" in the EEPROM nonvolatile memory 108. It is updated whenever a new MNOS nonvolatile memory 108 block is opened and can be uploaded into the microcomputer random access memory if the regular service block in both the MNOS memory 106 and the EEPROM memory 108 are lost or contaminated.

At power up time, the power down block data from both nonvolatile memories are read into the microcomputer 104 random access memory. Data in the "trip records" are also searched and read. If the data are not corrupted and passed the control sum test, the ascending and descending registers from the trip record must agree with those read from the power down block (of the MNOS nonvolatile memory in regular cases), otherwise the meter will be locked out to preclude further operation as a code 27 fatal error.

Finally, in the service mode, the descending register of the current trip record stored in the EEPROM nonvolatile memory 108 can be displayed by depressing the postage meter batch count key, not shown.

A system for the nonvolatile storage of data has thus been disclosed which includes a microcomputer means coupled to the data terminals of first and second nonvolatile memories. The first nonvolatile memory is of a type requiring data to be applied to its data terminals for more than a predetermined time for data to be written into the memory. The second nonvolatile memory is of a type wherein data applied to the memory data terminals for less than the predetermined time is sufficient for data to be written into the second memory. A program store is coupled to the microcomputer means for controlling the operation of the microcomputer means to apply, for at least the predetermined period of time, data to the first nonvolatile memory data terminals and during the predetermined time while data is being applied to the first nonvolatile memory data terminals to apply data to the second nonvolatile memory means data terminals.

In accordance with the disclosed embodiment, the system further includes a power supply coupled to the microcomputer means for energizing the microcomputer means and energy storage means coupled to the microcomputer means for energizing the microcomputer means for a time greater than a predetermined period of time when energization of the microcomputer means by the power supply means is interrupted. The program store means controls the microcomputer to write data into the second nonvolatile memory when the microcomputer means is energized by the power supply means and to write data into both the first and second nonvolatile memory means when the microcomputer means is energized by the energy storage means.

The first nonvolatile memory is of the MNOS type and the second nonvolatile means is of the EPROM type, the MNOS type nonvolatile memory having address lines and data lines and also coupled to the EEPROM type nonvolatile memory having address lines and data lines. The address lines and data lines of the two nonvolatile memories are coupled to the microcomputer means such that the MNOS memory data lines are always at a high value whenever the EEPROM memory is addressed for the purpose of either writing or reading.

The EEPROM nonvolatile memory control terminals and the MNOS nonvolatile memory control terminals are coupled to different microcomputer means ports. Access to the MNOS nonvolatile memory is achieved by input/output mapping techniques and access to the EEPROM nonvolatile memory is achieved by memory mapping techniques. In this way, protection is provided against inadvertently accessing the wrong memory or wrong address while executing read/write instructions to selected memory.

The postage meter system disclosed includes the nonvolatile memory means and also a program store means coupled to a microcomputer means. Postage meter transactional accounting data records are stored in the nonvolatile memory. Each transactional accounting data record includes a header portion having piece count related data and a piece count data field. The most current stored transactional accounting record header includes piece count related data which differs from the piece count data stored in the piece count field. Other stored transactional accounting records have headers with piece count related data which are the same as the piece count data stored in the piece count field. In this way, the most current record can be rapidly identified.

Nonvolatile memory locations are utilized for storing postage value setting prior to the commencement of a postage dispensing transaction. By utilizing the ring buffer postage setting data and the most current postage transactional accounting record, a postage meter transaction can be reconstructed and written into a new postage transactional accounting record should a writing into nonvolatile memory fault occur during the concurrence of a postage meter transaction and the powering down of the postage meter system.

In accordance with another feature, a random access memory means and program store means are coupled to the microcomputer means. The program store means causes the microcomputer means to write a full set of critical postage accounting data into the random access memory, a second full set of critical accounting data and a set of abbreviated critical accounting data into the non-volatile memory. The program store means further causes the microcomputer means, when an error is detected in at least one of the nonvolatile memory records, upon a comparison of data, where data in the random access memory is used as the accurate reference data, to rewrite data into both the full record and the abbreviated data record stored in the nonvolatile memory.

While this invention has been disclosed and described with reference to the particular embodiments shown herein, it will be apparent that variations and modifications may be made, and it is intended in the following claims to cover such variations and modifications as fall within their scope, Art. 69(1) EPC.

**Claims**

1. A system for the non-volatile storage of data, comprising:

   a microcomputer means (104);

   a first non-volatile memory (106) having data terminals connected to said microcomputer means (104) for having data written into said first non-volatile memory (106) by said microcomputer means (104), said first non-volatile memory (106) being of a type requiring data to be applied to said first non-volatile memory data terminals for more than a predetermined time for data to be written into said first non-volatile memory (106);

   a second non-volatile memory (108) having data terminals connected to said microcomputer means (104) for having data written into said second non-volatile memory (108), said second non-volatile memory (108) being of a type wherein a time less than said predetermined time is a sufficient time for data applied to said second non-volatile memory to be written into said second non-volatile memory (108); and

   program store means (124) coupled to said microcomputer means (104) for controlling the operation of said microcomputer means (104) to apply, for at least said predetermined time, data to said first non-volatile memory data terminals for writing data into said first non-volatile memory (106) and during said predetermined time to apply data to said second non-volatile memory data terminals.

2. A postage meter system of the type having a microcomputer means (104) with first and second non-volatile memory means (108) coupled thereto for the storage of postage meter accounting data, comprising:

   said first non-volatile memory means (106) having data terminals connected to said microcomputer means (104) for having data written into said non-volatile memory means (106) by said microcomputer means (104), said first non-volatile memory means being of a type requiring data to be applied to said first non-volatile memory means data terminals for more than a predetermined time for data to be written into said non-volatile memory means (106);

   said second non-volatile memory means (108) having data terminals connected to said microcomputer means (104) for having data written into said second non-volatile memory means (108), said second non-volatile memory means (108) being of a type wherein a time less than said predetermined time is a sufficient time for data applied to said second non-volatile memory means to be written into said second non-volatile memory means (108); and

   a program store means coupled to said microcomputer means (104) for controlling the operation of said microcomputer means (104) to apply, for at least said predetermined time, postage accounting data to said first non-volatile memory means data terminals and during said predetermined time while data is applied to said first non-volatile memory means data terminals, to apply postage meter accounting data to said second non-volatile memory means data terminals.

3. A system as defined in claim 1 or 2 further comprising power supply means coupled to said microcomputer means for energizing said microcomputer means; energy storage means (118) coupled to said microcomputer means (104) for a time greater than said predetermined time when energization of said microcomputer means (104) by said power supply means is interrupted; and, said program store means controlling said microcomputer means to write data only into said second non-volatile memory means (108) when said microcomputer means (104) is energized by said power supply means and to write data into both said first and said second non-volatile memory means (106,108) when said microcomputer means (104) is energized by said energy storage means (118).

4. A system as defined in any of claims 1 to 3 wherein said first non-volatile memory means (106) is an MNOS type non-volatile memory and said second non-volatile memory means (108) is an EEPROM type non-volatile memory.

5. A system as defined in claim 4 further comprising a secure housing (102) enclosing said microcomputer means (104) and said first and said second non-volatile memory means (106,108).

6. A system as defined in claim 5 wherein said secure housing (102) is fabricated from conducting material to provide electromagnetic shielding for said components within said secure housing (102).

7. A system as defined in claim 6 wherein the same postage accounting data is applied to said first and said second non-volatile memory (106,108) during each predetermined time period where data is applied to said first and said second non-volatile memory (106,108).

8. A system according to any of claims 4 to 7 wherein the address lines and data lines of the two non-volatile memories (106,108) are coupled to the microcomputer means such that the MNOS memory data lines are always at a high value whenever the EEPROM memory (108) is addressed for the purpose of either writing or reading.

9. A system according to any of claims 4 to 8 wherein:

said microcomputer means (104) has a first port with a plurality of terminals and a second port with a plurality of terminals;

said MNOS non-volatile memory (106) has data terminals and address terminals;

said EEPROM non-volatile memory (108) has data terminals and address terminals;

first coupling means couple said MNOS non-volatile memory data terminals and a portion of said plurality of address terminals to said microcomputer means second port plurality of terminals and further couple a portion of the plurality of address terminals to said microcomputer means first port plurality of terminals; and

second coupling means couple said EEPROM non-volatile memory data terminals and a portion of said address terminals to said microcomputer means first port plurality of terminals and further couple a portion of said address terminals to said microcomputer means second port plurality of terminals.

10. A system according to any of claims 4 to 8 wherein said microcomputer means (104) has a first port with a plurality of terminals and a second port with a plurality of higher and lower order terminals;

said EEPROM non-volatile memory (108) has non-volatile memory address terminal means having lower order and higher order address terminals, and data terminals;

said MNOS non-volatile memory (106) has non-volatile memory address terminal means having lower and higher order address terminals and data terminals;

means are provided for coupling said terminals of said second microcomputer port to said higher order address terminals of both said non-volatile memories and to the data terminals of said MNOS non-volatile memory (106); and

program store means are coupled to control operation of said microcomputer such that when said EEPROM memory (108) is accessed for reading or writing purposes, said microcomputer means (104) outputs an address for said EEPROM memory (108) such that said data input terminals of said MNOS memory (106) are maintained at a predetermined level.

11. A system according to any of claims 4 to 8 wherein said microcomputer means (104) has a first port (PO) with a plurality of terminals and a second port (P2) with a plurality of terminals;

said EEPROM non-volatile memory (108) has non-volatile memory control terminals, address terminal means having lower order and higher order address terminals, and data terminals;

said MNOS non-volatile memory (106) has non-volatile memory control terminals, address terminal means having lower and higher order address terminals and data terminals;

first coupling means are provided for coupling lower order terminals of said second microcomputer port to said higher order address terminals of both said non-volatile memories (106,108) and higher order terminals of said second microcomputer port to the data terminals of said MNOS non-volatile memory (106);

second coupling means are provided for coupling said terminals of said first microcomputer port to said lower order address terminals of both said non-volatile memories (106,108) and said data terminals of said EEPROM non-volatile memory (108);

program store means are coupled to control operation of said microcomputer (104) such that when said EEPROM memory (108) is accessed for reading or writing purposes, said microcomputer means (104) outputs an address for said EEPROM memory (108) such that said data input terminals of said MNOS memory (106) are maintained at a predetermined level so that if noise inadvertently occurs on said MNOS control lines which would otherwise condition said MNOS memory (106) to have data written therein, said MNOS memory (106) is still protected against overwriting because the application of said predetermined level to said MNOS non-volatile memory (106) prevents erasure required for overwriting.

12. A system as defined in claim 10 or 11 for the non-volatile storage of data wherein said predetermined level is a high voltage level.

13. A system as defined in claim 10 for the non-volatile storage of data, comprising: second coupling means coupling said terminals of said first microcomputer port to said lower order address terminals of both said non-volatile memories (106,108) and said data terminals of said EEPROM non-volatile memory (108).

14. A system as defined in claim 11 for the non-volatile storage of data wherein said EEPROM non-volatile memory control terminals and said MNOS non-volatile memory control terminals are coupled to said microcomputer means (104) such that access to said MNOS non-volatile memory (106) is achieved by input/output mapping techniques and access to said EEPROM non-volatile memory (108) is achieved by memory mapping techniques such that protection is provided against inadvertently accessing the wrong memory or wrong address while executing read/write instructions to a selected memory.

15. A system as defined in claim 14 for the non-volatile storage of data wherein said microcomputer means (104) further include a third port (P3) with a plurality of terminals and a fourth (PI) port with a plurality of terminals and said EEPROM non-volatile memory control terminals are coupled to said fourth port of said microcomputer means.

16. A system as defined in claim 15 for the non-volatile storage of data wherein said program store means includes an operating program for accounting for the dispensing of postage.

17. A system according to claim 2 wherein:
said non-volatile memory means (106,108) has locations for storing postage meter transactional accounting data records;
each transactional accounting data record has a header portion including piece count related data and a piece count data field;
the most current stored transactional accounting record header includes piece count related data which differs from the piece count data stored in the piece count field; and
other stored transactional accounting records having headers with piece count related data, which is the same as the piece count data, are stored in the piece count field such that the most current record can be rapidly identified.

18. A system as defined in claim 17 including providing non-volatile memory locations for storing postage value setting prior to the commencement of a postage dispensing transaction; and
said microcomputer means (104) being operable to utilize said postage setting data and the most current postage transactional accounting record to reconstruct a postage meter transaction for writing a new valid postage transactional accounting record should a non-volatile memory writing fault occur during the concurrence of a postage meter transaction and the powering down of the postage meter system.

19. A system as defined in claim 17 including means for maintaining individual error counter information for a number of separate error conditions.

20. A system as defined in claim 19 wherein said individual error counter information is of a first type such that the occurrence of a single such error causes the microcomputer means to set a flag and preclude said postage meter system from further operation until a power down and power up sequence has occurred and is of a second type which if such error occurs more than a predetermined number of times per predetermined number of postage meter transaction operations, will cause said microcomputer to set a flag to permanently preclude said postage meter system from further operation until said meter system is taken out of service.

21. A system as defined in claim 17 wherein said postage transactional accounting records include a field for the storage of soft error counter data or remap record pointer data.

22. A postage meter system according to claim 2 further comprising:
random access memory means coupled to the microcomputer means (104), wherein said program store means is operable to cause said microcomputer means (104) to write a full set of critical postage accounting data into the random access memory, a second full set of critical accounting data into at least one of the non-volatile memory means (106,108) and a set of abbreviated critical accounting data in at least one of said non-volatile memory means (106,108); and

said program store means is further operable to cause said microcomputer means (104) to rewrite data into both the full record stored in the non-volatile memory and the abbreviated data record stored in the non-volatile memory when an error is detected in at least one of the non-volatile memory records, upon a comparison of data, where data in the random access memory is used as the accurate reference data.

23. A system as defined in claim 22 wherein said comparison is between critical accounting portion of the full postage transactional accounting record data and the corresponding data in the random access memory.

24. A system as defined in claim 23 wherein the critical postage transactional accounting data comprises: the piece count, the descending register and the ascending register.

25. A system as defined in claim 24 wherein the critical postage transactional accounting data further includes the cyclic redundancy check for the descending register and the ascending register.

26. A system as defined in claim 25 wherein a soft error counter is incremented when an error in the critical accounting data is detected and a rewriting into said non-volatile memory means has occurred successfully.

27. A system as defined in claim 17 or 22 wherein the non-volatile memory is organized such that a predetermined number of record locations is saved in reserve for the full record locations and for the abbreviated data record and wherein when a primary record location failure for either the full data or abbreviated data occurs, the microcomputer means (104) activates unused reserve record locations which in conjunction with a remap record pointer cause the unused reserve record locations to function as the primary record locations.

28. A system as defined in claim 27 wherein said microcomputer means (104) is operable to set a flag to render said meter system inoperable when said predetermined number of secondary locations have been utilized.

**Revendications**

1. Un système de mémorisation non volatile de données, comprenant :

un moyen (104) de micro-ordinateur;

une première mémoire non volatile (106) comportant des terminaux de données reliés audit moyen (104) de micro-ordinateur afin que des données soient écrites dans ladite première mémoire non volatile (106) par ledit moyen (104) de micro-ordinateur, ladite première mémoire non volatile (106) étant d'un type qui exige que des données soient appliquées auxdits terminaux de données de la première mémoire non volatile pendant un temps supérieur à un temps prédéterminé pour que des données soient écrites dans ladite première mémoire non volatile (106);

une deuxième mémoire non volatile (108) comportant des terminaux de données reliés audit moyen (104) de micro-ordinateur pour que des données soient écrites dans ladite deuxième mémoire non volatile (108), ladite deuxième mémoire non volatile (108) étant d'un type dans lequel un temps inférieur audit temps prédéterminé est un temps suffisant pour que des données appliquées à ladite deuxième mémoire non volatile soient écrites dans ladite deuxième mémoire non volatile (108); et

un moyen (124) de mémoire de programme couplé audit moyen (104) de micro-ordinateur pour commander le fonctionnement dudit moyen (104) de micro-ordinateur pour appliquer, pendant au moins ledit temps prédéterminé, des données auxdits terminaux de données de la première mémoire non volatile afin d'écrire des données dans ladite première mémoire non volatile (106) et pendant ledit temps prédéterminé pour appliquer des données auxdits terminaux de données de la deuxième mémoire non volatile.

2. Un système de machine à affranchir du type comportant un moyen (104) de micro-ordinateur auquel sont couplés un premier et un deuxième moyens (108) de mémoires non volatiles pour la mémorisation de données de comptabilité de machine à affranchir, comprenant :

ledit premier moyen (106) comportant des terminaux de données reliés audit moyen (104) de microordinateur afin que des données soient écrites dans ladite première mémoire non volatile (106) par ledit moyen (104) de micro-ordinateur, ledit premier moyen de mémoire non volatile (106) étant d'un type qui exige que des données soient appliquées auxdits terminaux de données du premier moyen de mémoire non volatile pendant un temps supérieur à un temps prédéterminé pour que des données soient écrites dans ledit premier moyen de mémoire non volatile (106);

ledit deuxième moyen (108) de mémoire non volatile (108) comportant des terminaux de données reliés audit moyen (104) de micro-ordinateur pour que des données soient écrites dans ledit deuxième moyen de mémoire non volatile (108), ledit deuxième moyen de mémoire non volatile (108) étant d'un type dans lequel un temps inférieur audit temps prédéterminé est un temps suffisant pour que des données appliquées audit deuxième moyen de mémoire non volatile soient écrites dans ledit deuxième moyen de mémoire non volatile (108); et

un moyen de mémorisation de programme couplé audit moyen (104) de micro-ordinateur pour commander le fonctionnement dudit moyen (104) de micro-ordinateur pour appliquer, pendant au moins ledit temps prédéterminé, des données de comptabilité d'affranchissement auxdits terminaux de données de premier moyen de mémoire non volatile et pour appliquer, pendant ledit temps prédéterminé au cours duquel une donnée est appliquée auxdits terminaux de données de premier moyen de mémoire non volatile, des données de comptabilité de machine à affranchir auxdits terminaux de données du deuxième moyen de mémoire non volatile.

3. Un système selon la revendication 1 ou 2 comprenant en outre un moyen d'alimentation en énergie couplé audit moyen de micro-ordinateur pour alimenter ledit moyen de micro-ordinateur; un moyen (118) de stockage d'énergie couplé audit moyen (104) de microordinateur pendant un temps supérieur audit temps prédéterminé lorsque l'alimentation dudit moyen (104) de micro-ordinateur par ledit moyen d'alimentation en énergie est interrompue; et ledit moyen de mémoire de programme commandant ledit moyen de micro-ordinateur pour n'écrire de données que dans le deuxième moyen (108) de mémoire non volatile lorsque ledit moyen (104) de micro-ordinateur est alimenté par ledit moyen d'alimentation en énergie et pour écrire des données tant dans le premier que dans le deuxième moyens (106, 108) de mémoires non volatiles lorsque ledit moyen (104) de micro-ordinateur est alimenté par ledit moyen (118) de stockage d'énergie.

4. Un système selon l'une quelconque des revendications 1 à 3 dans lequel ledit premier moyen (106) de mémoire non volatile est une mémoire non volatile du type MNOS et ledit deuxième moyen (108) de mémoire non volatile est une mémoire non volatile du type EEPROM.

5. Un système selon la revendication 4 comprenant en outre un boîtier de sécurité (102) enfermant ledit moyen (104) de micro-ordinateur et lesdits premier et deuxième moyens (106, 108) de mémoires non volatiles.

6. Un système selon la revendication 5 dans lequel ledit boîtier de sécurité (102) est fabriqué en matière conductrice pour réaliser un écran électromagnétique pour lesdits composants situés à l'intérieur dudit boîtier de sécurité (102).

7. Un système selon la revendication 6, dans lequel la même donnée de comptabilité d'affranchissement est appliquée à ladite première et à ladite deuxième mémoires non volatiles (106, 108) pendant chaque laps de temps prédéterminé où la donnée est appliquée à ladite première et à ladite deuxième mémoires non volatiles (106, 108).

8. Un système selon l'une quelconque des revendications 4 à 7 dans lequel les lignes d'adresses et les lignes de données des deux mémoires non volatiles (106, 108) sont couplées au moyen de microordinateur d'une manière telle que les lignes de donnée de mémoire MNOS sont toujours à une valeur haute chaque fois que la mémoire EEPROM (108) est adressée dans le but, soit d'écrire, soit de lire.

9. Un système selon l'une quelconque des revendications 4 à 8 dans lequel :

ledit moyen (104) de micro-ordinateur comprend un premier port comportant une pluralité de terminaux et un deuxième Port comportant une pluralité de terminaux;

ladite mémoire non volatile MNOS (106) comporte des terminaux de données et des terminaux d'adresses;

ladite mémoire non volatile EEPROM (108) comporte des terminaux de données et des terminaux d'adresses;

des premiers moyens de couplage couplent lesdits terminaux de données de mémoire non volatile MNOS et une partie de ladite pluralité de terminaux d'adresses à ladite pluralité de terminaux du deuxième port de moyen de micro-ordinateur et couplent en outre une partie de la pluralité de terminaux d'adresses à ladite pluralité de terminaux du premier port du moyen microordinateur; et

des deuxièmes moyens de couplage couplent lesdits terminaux de données de mémoire non volatile EEPROM et une partie desdits terminaux d'adresses à ladite pluralité de terminaux du premier port du moyen de micro-ordinateur et couplent en outre une partie desdits terminaux d'adresses à ladite pluralité de terminaux du deuxième port du moyen de microordinateur.

10. Un système selon l'une quelconque des revendications 4 à 8 dans lequel ledit moyen (104) de micro-ordinateur comprend un premier port comportant une pluralité de terminaux et un deuxième port comportant une pluralité de terminaux d'ordres supérieur et inférieur;

ladite mémoire non volatile EEPROM (108) comprend un moyen de terminaux d'adresses de mémoire non volatile comportant des terminaux d'adresses d'ordres inférieur et supérieur, et des terminaux de données;

ladite mémoire non volatile MNOS (106) comporte un moyen de terminaux d'adresses de mémoire non volatile comportant des terminaux d'adresses d'ordres inférieur et supérieur et des terminaux de données;

des moyens sont prévus pour coupler lesdits terminaux dudit deuxième port de micro-ordinateur auxdits terminaux d'adresses d'ordre supérieur desdites deux mémoires non volatiles et aux terminaux de données de ladite mémoire non volatile MNOS (106); et

des moyens de mémoire de programme sont couplés pour commander le fonctionnement dudit micro-ordinateur d'une manière telle que, en cas d'accès à ladite mémoire EEPROM (108) dans des buts de lecture ou d'écriture, ledit moyen (104) de micro-ordinateur envoie pour ladite mémoire EEPROM une adresse telle que lesdits terminaux d'entrée de données de ladite mémoire MNOS (106) sont maintenus à un niveau prédéterminé.

11. Un système selon l'une quelconque des revendications 4 à 8 dans lequel ledit moyen (104) de micro-ordinateur comprend un premier port (P0) comportant une pluralité de terminaux et un deuxième port (P2) comportant une pluralité de terminaux;

ladite mémoire non volatile EEPROM (108) comprend des terminaux de commande de mémoire non volatile, un moyen de terminaux d'adresses comportant des terminaux d'adresses d'ordres inférieur et supérieur, et des terminaux de données;

ladite mémoire non volatile MNOS (106) comporte des terminaux de commande de mémoire non volatile, un moyen de terminaux d'adresses comportant des terminaux d'adresses d'ordres inférieur et supérieur et des terminaux de données;

des premiers moyens de couplage sont prévus pour coupler des terminaux d'ordre inférieur dudit deuxième port de micro-ordinateur auxdits terminaux d'adresses d'ordre supérieur desdites deux mémoires non volatiles (106, 108) et des terminaux d'ordre supérieur dudit deuxième port de micro-ordinateur aux terminaux de données de ladite mémoire non volatile MNOS (106);

des deuxièmes moyens de couplage sont prévus pour coupler lesdits terminaux dudit premier port de micro-ordinateur auxdits terminaux d'adresses d'ordre inférieur desdites deux mémoires non volatiles (106, 108) et auxdits terminaux de données de ladite mémoire non volatile EEPROM (108);

des moyens de mémoire de programme sont couplés pour commander le fonctionnement dudit micro-ordinateur (104) d'une manière telle que, en cas d'accès à ladite mémoire EEPROM (108) dans des buts de lecture ou d'écriture, ledit moyen (104) de micro-ordinateur envoie pour ladite mémoire EEPROM une adresse telle que lesdits terminaux d'entrée de données de ladite mémoire MNOS (106) sont maintenus à un niveau prédéterminé d'une manière telle que, s'il apparaît par inadvertance sur lesdites lignes de commande MNOS un bruit qui conditionnerait dans le cas contraire ladite mémoire MNOS (106) pour que des données y soient écrites, ladite mémoire MNOS (106) est encore protégée contre une surimpression parce que l'application dudit niveau prédéterminé à ladite mémoire non volatile MNOS (106) empêche l'effacement nécessaire pour surimprimer.

12. Un système selon la revendication 10 ou 11 destiné à la mémorisation non volatile de données dans lequel ledit niveau prédéterminé est un niveau haut de tension.

13. Un système selon la revendication 10 destiné à la mémorisation non volatile de données, comprenant : des deuxièmes moyens de couplage couplant lesdits terminaux dudit premier port de micro-ordinateur auxdits terminaux d'adresses d'ordre inférieur desdites deux mémoires non volatiles (106, 108) et auxdits terminaux de données de ladite mémoire non volatile EEPROM (108).

14. Un système selon la revendication 11, destiné à la mémorisation non volatile de données dans lequel lesdits terminaux de commande de mémoire non volatile EEPROM et lesdits terminaux de commande de mémoire non volatile MNOS sont couplés audit moyen (104) de micro-ordinateur de façon qu'un accès à ladite mémoire non volatile MNOS (106) est obtenu par des techniques d'implantation d'entrée/sortie et un accès à ladite mémoire non volatile EEPROM (108) est obtenu par des techniques d'implantation de mémoire telles que soit réalisée une protection contre un accès par inadvertance à la mémoire erronée ou à une adresse erronée lors de l'exécution d'instructions de lecture/écriture à une mémoire choisie.

15. Un système selon la revendication 14 destiné à la mémorisation non volatile de données dans lequel ledit moyen (104) de micro-ordinateur comprend en outre un troisième port (P3) comportant une pluralité de terminaux et un quatrième port (P1) comportant une pluralité de terminaux et lesdits terminaux de commande de mémoire non volatile EEPROM sont couplés audit quatrième port dudit moyen de micro-ordinateur.

16. Un système selon la revendication 15 destiné à la mémorisation non volatile de données dans lequel ledit moyen de mémoire de programme comprend un programme d'exploitation destiné à la comptabilité de la distribution d'affranchissement.

17. Un système selon la revendication 2 dans lequel:

ledit moyen de mémoires non volatiles (106, 108) comporte des emplacements de mémorisation d'enregistrements de données de comptabilité de transactions de machine à affranchir;

chaque enregistrement de données de comptabilité de transactions comporte une partie d'en-tête incluant des données liées au comptage de pièces et un champ de données de comptage de pièces;

l'en-tête d'enregistrement de comptabilité de transactions mémorisé le plus actuel comprend une donnée liée au compte de pièces qui diffère de la donnée de compte de pièces mémorisée dans le champ de compte de pièces; et

d'autres enregistrements mémorisés de comptabilité de transactions comprenant des en-têtes comportant une donnée liée au compte de pièces, qui est la même que la donnée de compte de pièces, sont mémorisés dans le champ de compte de pièces d'une manière telle que l'enregistrement le plus actuel puisse être rapidement identifié.

18. Un système selon la revendication 17 comprenant le fait de prévoir des emplacements de mémoires non volatiles pour mémoriser un établissement de valeur d'affranchissement avant le début d'une transaction de distribution d'affranchissement; et

ledit moyen de micro-ordinateur (104) pouvant être exploité pour utiliser ladite donnée d'établissement d'affranchissement et l'enregistrement le plus courant de comptabilité de transactions d'affranchissement pour reconstituer une transaction de machine à affranchir afin d'écrire un nouvel enregistrement valide de comptabilité de transactions d'affranchissement si un défaut d'écriture en mémoire non volatile devait apparaître pendant que se produisent simultanément une transaction de machine à affranchir et un arrêt d'alimentation en énergie du système de machine à affranchir.

19. Un système selon la revendication 17 comprenant des moyens destinés à maintenir une information individuelle de compteur d'erreurs pour un nombre de conditions d'erreurs séparées.

20. Un système selon la revendication 19 dans lequel ladite information individuelle de compteur d'erreurs est d'un premier type tel que l'apparition d'une erreur unique de ce type amène le moyen de micro-ordinateur à placer un drapeau et à empêcher toute nouvelle opération du système de machine à affranchir jusqu'à ce que se soit produite une séquence d'arrêt et de restauration d'alimentation en énergie et est d'un deuxième type qui, si une telle erreur apparait plus d'un nombre de fois prédéterminé dans un nombre prédéterminé d'opérations de transactions de machine à affranchir, amènera ledit micro-ordinateur à placer un drapeau pour empêcher en permanence toute mise en oeuvre dudit système de machine à affranchir jusqu'à ce que ledit système de machine à affranchir soit mis hors service.

21. Un système selon la revendication 17 dans lequel lesdits enregistrements de comptabilité de transactions d'affranchissements comprennent un champ destiné à la mémorisation de données de compteur d'erreurs de logiciel ou de données d'indicateur d'enregistrement de nouvelle implantation.

22. Un système de machine à affranchissement selon la revendication 2 comprenant en outre :

un moyen de mémoire vive couplé au moyen (104) de micro-ordinateur, dans lequel ledit moyen de mémoire de programme peut être exploité pour amener ledit moyen (104) de micro-ordinateur à écrire un jeu complet de données critiques de comptabilité d'affranchissements dans la mémoire vive, un deuxième jeu complet de données critiques de comptabilité dans au moins l'un des moyens de mémoires non volatiles (106, 108) et un jeu de données critiques abrégées de comptabilité dans l'un au moins desdits moyens de mémoires non volatiles (106, 108); et

ledit moyen de mémoire de programme peut en outre être exploité pour amener ledit moyen (104) de micro-ordinateur à réécrire des données tant dans l'enregistrement complet mémorisé dans la mémoire non volatile que dans l'enregistrement abrégé de données mémorisé dans la mémoire non volatile lorsqu'une erreur est détectée dans au moins l'un des enregistrements de mémoires non volatiles, lors d'une comparaison de données, où une donnée située dans la mémoire vive est utilisée comme la donnée de référence précise.

23. Un système selon la revendication 22 dans lequel ladite comparaison est effectuée entre une partie critique de comptabilité de la donnée d'enregistrement complet de comptabilité de transactions d'affranchissement et la donnée correspondante située dans la mémoire vive.

24. Un système selon la revendication 23 dans lequel la donnée critique de comptabilité de transactions d'affranchissement comprend : le compte de pièces, le registre descendant et le registre ascendant.

25. Un système selon la revendication 24 dans lequel la donnée critique de comptabilité de transactions d'affranchissement comprend en outre la vérification de redondance cyclique du registre descendant et du registre ascendant.

26. Un système selon la revendication 25 dans lequel un compteur d'erreurs de logiciel est incrémenté lorsqu'une erreur de la donnée critique de comptabilité est détectée et qu'une réécriture dans ledit moyen de mémoire non volatile s'est produite avec succès.

27. Un système selon la revendication 17 ou 22 dans lequel la mémoire non volatile est organisée d'une manière telle qu'un nombre prédéterminé d'emplacements d'enregistrements est sauvegardé en réserve pour les emplacements d'enregistrement complet et pour l'enregistrement abrégé de données et dans lequel, lorsqu'il se produit une défaillance d'emplacement d'enregistrement primaire soit pour la donnée complète soit pour la donnée abrégée, le moyen (104) de micro-ordinateur active des emplacements inutilisés d'enregistrements de réserve qui, en liaison avec un indicateur d'enregistrements de réimplantation, amènent les emplacements inutilisés d'enregistrements de réserve à fonctionner en tant qu'emplacements primaires d'enregistrements.

28. Un système selon la revendication 27 dans lequel ledit moyen (104) de micro-ordinateur peut être exploité pour placer un drapeau pour empêcher l'exploitation dudit système de machine à affranchir lorsque ledit nombre prédéterminé déplacements secondaires a été utilisé.

**Patentansprüche**

1. System zur nichtflüchtigen Speicherung von Daten, umfassend:
   - eine Mikrocomputer-Einrichtung(104);
   - einen ersten nichtflüchtigen Speicher (106) mit Datenanschlüssen, die an die Mikrocomputer-Einrichtung (104) zum Einschreiben von Daten durch die Mikrocomputer-Einrichtung(104) in den ersten nichtflüchtigen Speicher (106) angeschlossen sind, wobei der erste nichtflüchtige Speicher (106) ein Typ ist, der für das Anlegen von Daten an die Datenanschlüsse des nichtflüchtigen Speichers zum Einschreiben von Daten in den ersten nichtflüchtigen Speicher (106) eine längere als vorbestimmte Zeitdauer benötigt;
   - einen zweiten nichtflüchtigen Speicher (108) mit an die Mikrocomputer-Einrichtung (104) angeschlossenen Datenanschlüssen zum Einschreiben von Daten in den zweiten nichtflüchtigen Speicher (108), wobei der zweite nichtflüchtige Speicher (108) ein Typ ist, bei dem eine kürzere als die vorbestimmte Zeitdauer ausreicht, um an den zweiten nichtflüchtigen Speicher angelegte Daten in den zweiten nichtflüchtigen Speicher (108) einzuschreiben; und

- eine Programmspeichereinrichtung (124), die an die Mikrocomputer-Einrichtung (104) zur Steuerung des Betriebes der Mikrocomputer-Einrichtung (104) angeschlossen sind, um während mindestens der vorbestimmten Zeitdauer Daten zum Einschreiben in den ersten nichtflüchtigen Speicher an die Datenanschlüsse des ersten nichtflüchtigen Speicher (108) anzulegen, und um während der vorbestimmten Zeitdauer Daten an die Datenanschlüsse des zweiten nichtflüchtigen Speichers anzulegen.

2. Frankiermaschinensystem mit einer Mikrocomputer-Einrichtung (104) mit an diese zur Speicherung von Frankiermaschinenabrechnungsdaten angeschlossenen ersten und zweiten nichtflüchtigen Speichermitteln (106, 108), umfassend:

- der erste nichtflüchtige Speicher (106) ist mit Datenanschlüssen versehen, die an die Mikrocomputer-Einrichtung (104) zum Einschreiben von Daten durch die Mikrocomputer-Einrichtung (104) in den ersten nichtflüchtigen Speicher (106) angeschlossen sind, wobei der erste nichtflüchtige Speicher (106) ein Typ ist, der für das Anlegen von Daten an die Datenanschlüsse des nichtflüchtigen Speichers zum Einschreiben von Daten in den ersten nichtflüchtigen Speicher (106) eine längere als vorbestimmte Zeitdauer benötigt;

- der zweite nichtflüchtige Speicher (108) ist mit an die Mikrocomputer-Einrichtung (104) angeschlossenen Datenanschlüssen zum Einschreiben von Daten in den zweiten nichtflüchtigen Speicher (108) versehen, wobei der zweite nichtflüchtige Speicher (108) ein Typ ist, bei dem eine kürzere als die vorbestimmte Zeitdauer ausreicht, um an den zweiten nichtflüchtigen Speicher angelegte Daten in den zweiten nichtflüchtigen Speicher (108) einzuschreiben; und

- eine Programmspeichereinrichtung (124), die an die Mikrocomputer-Einrichtung (104) zur Steuerung des Betriebes der Mikrocomputer-Einrichtung (104) angeschlossen ist, um während mindestens der vorbestimmten Zeitdauer Daten zum Einschreiben in den ersten nichtflüchtigen Speicher an die Datenanschlüsse des ersten nichtflüchtigen Speichers (108) anzulegen, und um während der vorbestimmten Zeitdauer Portogebührenabrechnungsdaten an die Datenanschlüsse der ersten nichtflüchtigen Speichermittel anzulegen, und um während der vorbestimmten Zeitdauer, während der Daten an die Datenanschlüsse der ersten flüchtigen Speichermittel angelegt sind, Portogebührenabrechnungsdaten an die Datenanschlüsse der zweiten nichtflüchtigen Speichermittel anzulegen.

3. System nach Anspruch 1 oder 2, das außerdem umfaßt:
Stromversorgungsmittel, die an die Mikrocomputer-Einrichtung zur Spannungsversorgung angeschlossen sind; Energiespeichermittel (118), die, bei Unterbrechung der von den Stromversorgungsmitteln an die Mikrocomputer-Einrichtung (104) angelegten Spannung, während einer Zeitdauer an die Mikrocomputer-Einrichtung (104) angeschlossen sind, die größer als die vorbestimmte Zeitdauer ist.

4. System nach einem der Ansprüche 1 bis 3, dadurch **gekennzeichnet,** daß die ersten nichtflüchtigen Speichermittel (106) aus einem nichtflüchtigen MNOS-Speicher und die zweiten nichtflüchtigen Speichermittel (108) aus einem nichtflüchtigen Speicher vom Typ EEPROM bestehen.

5. System nach Anspruch 4, dadurch **gekennzeichnet,** daß es weiter ein sicheres Gehäuse (102) aufweist, das die Mikrocomputer-Einrichtung (104) und die ersten und zweiten nichtflüchtigen Speichermittel (106, 108) umschließt.

6. System nach Anspruch 5, dadurch **gekennzeichnet,** daß das sichere Gehäuse (102) aus leitendem Material besteht, um für die im sicheren Gehäuse (102) befindlichen Teile eine elektromagnetische Abschirmung zu schaffen.

7. System nach Anspruch 6, dadurch **gekennzeichnet,** daß dieselben Portogebührenabrechnungsdaten an den ersten und zweiten nichtflüchtigen Speicher (106, 108) während jeder vorbestimmten Zeitdauer angelegt werden, während der Daten an den ersten und zweiten nichtflüchtigen Speicher (106, 108) angelegt werden.

**8.** System nach einem beliebigen Anspruch 4 bis 7,
dadurch **gekennzeichnet,** daß die Adressenleitungen und die Datenleitungen der beiden nichtflüchtigen Speicher (106, 108) derart an die Mikrocomputer-Einrichtung angeschlossen sind, daß die Datenleitungen des MNOS-Speichers stets hochpegelig sind, wenn der EEPROM-Speicher (108) zum Schreiben oder Lesen addressiert wird.

**9.** System nach einem beliebigen Anspruch 4 bis 8,
dadurch **gekennzeichnet,** daß:
- die Mikrocomputer-Einrichtung (104) einen ersten Anschluß mit einer Vielzahl von Klemmen, sowie einen zweiten Anschluß mit einer Vielzahl von Klemmen aufweist;
- der nichtflüchtige MNOS-Speicher (106) Datenanschlüssen und Adreßklemmen aufweist;
- der nichtflüchtige EEPROM-Speicher (108) Datenanschlüssen und Adreßklemmen aufweist;
- erste Kopplungsmittel die Datenanschlüssen des nichtflüchtigen MNOS-Speichers sowie einen Teil der Vielzahl der Adreßklemmen mit der Vielzahl der Klemmen des zweiten Anschlusses der Mikrocomputer-Einrichtung verbinden, und daß sie weiter einen Teil der Vielzahl der Adreßklemmen mit der Vielzahl der Klemmen des ersten Anschlusses der Mikrocomputer-Einrichtung verbinden; und
- daß zweite Kopplungsmittel die Datenanschlüssen des nichtflüchtigen EEPROM-Speichers sowie einen Teil der Adreßklemmen mit der Vielzahl der Klemmen des ersten Anschlusses der Mikrocomputer-Einrichtung verbinden, und daß sie weiter einen Teil der Adreßklemmen mit der Vielzahl der Klemmen des zweiten Anschlusses der Mikrocomputer-Einrichtung verbinden.

**10.** System nach einem beliebigen Anspruch 4 bis 8,
wobei die Mikrocomputer-Einrichtung (104) einen ersten Anschluß mit einer Vielzahl von Klemmen sowie einen zweiten Anschluß mit einer Vielzahl von Klemmen höherer und niederer Ordnung aufweist; wobei:
- der nichtflüchtige EEPROM-Speicher (108) Adreßklemmen niederer Ordnung und höherer Ordnung, sowie Datenanschlüssen aufweist;

- der nichtflüchtige MNOS-Speicher (106) Adreßklemmen niederer und höherer Ordnung, sowie Datenanschlüssen aufweist;
- Mittel zum Verbinden der Klemmen des zweiten Mikrocomputeranschlusses mit den Adreßklemmen höherer Ordnung beider nichtflüchtiger Speicher, sowie mit den Datenanschlüssen des nichtflüchtigen MNOS-Speichers (106) vorgesehen sind; und
- Speichermittel zur Betriebssteuerung der Mikrocomputer-Einrichtung so angeschlossen sind, daß wenn auf den EEPROM-Speicher (108) zum Lesen oder Schreiben zugegriffen wird, die Mikrocomputer-Einrichtung (105) eine Adresse solcher Art für den EEPROM-Speicher (108) ausgibt, daß die Dateneingangsklemmen des MNOS-Speichers (106) auf einem vorbestimmten Pegel gehalten werden.

**11.** System nach einem beliebigen Anspruch 4 bis 8,
wobei die Mikrocomputer-Einrichtung (104) einen ersten Anschluß (P0) mit einer Vielzahl von Klemmen und einen zweiten Anschluß (P2) mit einer Vielzahl von Klemmen aufweist; wobei:
- der nichtflüchtige EEPROM-Speicher (108) Steuerklemmen, Adreßklemmen niederer Ordnung und höherer Ordnung und Datenanschlüssen aufweist;
- der nichtflüchtige MNOS-Speicher (106) Steuerklemmen, Adreßklemmen niederer und höherer Ordnung und Datenanschlüssen aufweist;
- erste Verbindungsmittel zum Verbinden der Klemmen niederer Ordnung des zweiten Mikrocomputeranschlusses mit Adreßklemmen höherer Ordnung beider nichtflüchtiger Speicher (106, 108), sowie Klemmen höherer Ordnung des zweiten Mikrocomputeranschlusses mit den Datenanschlüssen des nichtflüchtigen MNOS-Speichers (106) vorgesehen sind; und
- zweite Verbindungsmittel zum Verbinden der Klemmen des ersten Mikrocomputeranschlusses mit Adreßklemmen niederer Ordnung beider nichtflüchtiger Speicher (106, 108), sowie mit den Datenanschlüssen des nichtflüchtigen EEPROM-Speichers (108) vorgesehen sind;
- Programmspeichermittel zur Betriebssteuerung der Mikrocomputer-Einrichtung (104) so angeschlossen sind, daß, wenn auf den EEPROM-Speicher (108) zum Lesen oder Schreiben zugegriffen wird, die Mikrocomputer-Einrichtung (104) eine Adresse solcher Art für den EEPROM-Speicher (108) ausgibt, daß die Dateneingangsklemmen des MNOS-Speichers (106) auf einem vorbestimmten Pegel gehalten werden, derart, daß wenn unvorhergesehene Störsignale auf den MNOS-Steuerleitungen auftreten, die an sich den MNOS-Speicher (106) für das Einschreiben von Daten aktivieren würden, der MNOS-Speicher (106) nach wie vor gegen Überschreiben geschützt wird, weil das Anlegen des vorbestimmten Pegels an den flüchtigen MNOS-Speicher (106) ein für das Überschreiben erforderliches Löschen verhindert.

12. System nach Anspruch 10 oder 11 für die nichtflüchtige Speicherung von Daten, wobei der vorbestimmte Pegel ein Hochspannungspegel ist.

13. System nach Anspruch 10 für die nichtflüchtige Speicherung von Daten, **gekennzeichnet** durch zweite Verbindungsmittel zum Verbinden der Klemmen des ersten Mikrocomputeranschlusses mit den Adreßklemmen niederer Ordnung beider nichtflüchtiger Speicher (106, 108); und durch Datenanschlüsse des nichtflüchtigen EEPROM-Speichers (108).

14. System nach Anspruch 11 für die nichtflüchtige Speicherung von Daten, dadurch **gekennzeichnet,** daß die Steuerklemmen des nichtflüchtigen EEPROM-Speichers und die Steuerklemmen des nichtflüchtigen MNOS-Speichers derart an die Mikrocomputer-Einrichtung (104) angeschlossen sind, daß ein Zugriff auf den nichtflüchtigen MNOS-Speicher (106) durch Eingabe-/Ausgabe-"Mapping"-Techniken, und ein Zugriff auf den nichtflüchtigen EEPROM-Speicher (108) durch Speicher-"Mapping"-Techniken erreicht wird, derart, daß bei der Ausführung von Lese-/Schreibanweisungen für einen gewählten Speicher Schutz gegen unbeabsichtigten Zugriff auf den falschen Speicher oder die falsche Adresse gegeben ist.

15. System nach Anspruch 14 für die nichtflüchtige Speicherung von Daten, dadurch **gekennzeichnet,** daß die Mikrocomputer-Einrichtung (104) weiter einen dritten Anschluß (P3) mit einer Vielzahl von Klemmen, sowie einen vierten Anschluß (P1) mit einer Vielzahl von Klemmen aufweist, und daß die Steuerklemmen des nichtflüchtigen EEPROM-Speichers mit dem vierten Anschluß der Mikrocomputer-Einrichtung verbunden sind.

16. System nach Anspruch 15 für die nichtflüchtige Speicherung von Daten, dadurch **gekennzeichnet,** daß die Programmspeichermittel ein Betriebsprogramm zum Abrechnen der Portogebührenausgaben enthält.

17. System nach Anspruch 2, wobei:
    - die nichtflüchtigen Speichermittel (106, 108) Plätze zum Speichern von Registrierungen der Frankiermaschinen-Transaktionsabrechnungsdaten aufweisen;
    - jede Registrierung der Transaktionsabrechnungsdaten einen Kopfabschnitt aufweist, der stückzähl-bezogene Daten und ein Stückzähl-Datenfeld umfaßt;
    - der Kopfabschnitt der Registrierung der am häufigsten gespeicherten Transaktionsabrechung stückzähl-bezogene Daten aufweist, die sich von den im Stückzähl-Feld gespeicherten Stückzähl-Daten unterscheiden; und
    - andere gespeicherte Transaktionsabrechnungs-Registrierungen mit stückzähl-bezogenen Daten im Kopfabschnitt, die den Stückzähl-Daten entsprechen, im Stückzähl-Feld so gespeichert werden, daß die häufigste Registrierung schnell identifiziert werden kann.

18. System nach Anspruch 17, umfassend:
    - nichtflüchtige Speicherplätze zum Speichern einer Portogebührenwerteinstellung vor Beginn einer Portogebühren-Ausgabetransaktion; und
    - die Mikrocomputer-Einrichtung (104) so betrieben wird, daß sie die Portogebühren-Einstellungsdaten und die Registrierung der häufigsten Portogebühren-Transaktionsabrechnung zur Rekonstruktion einer Frankiermaschinentransaktion verwenden kann, um eine neue gültige Portogebühren-Transaktionsabrechnungsregistrierung zu schreiben, falls während des gleichzeitigen Ablaufs einer Frankiermaschinentransaktion und der Versorgungschaltung des Frankiermaschinensystems ein Einschreibefehler im nichtflüchtigen Speicher auftreten sollte.

19. System nach Anspruch 17,
dadurch **gekennzeichnet,** daß es Mittel zur Aufrechterhaltung individueller Fehlerzähler-Informationen für eine Anzahl getrennter Fehlerbedingungen aufweist.

20. System nach Anspruch 17,
dadurch **gekennzeichnet,** daß die individuelle Fehlerzählerinformation von einer solchen ersten Art ist, daß das Auftreten eines einzelnen solchen Fehlers die Mikrocomputer-Einrichtung veranlaßt, eine Kennung zu setzen und das Frankiermaschinensystem am weiteren Betrieb solange hindert, bis ein Versorgungsausschalt- und Versorgungseinschaltvorgang stattgefunden hat, und daß die Information von einer zweiten Art ist, die, wenn ein solcher Fehler mehr als eine vorbestimmte Anzahl von Malen je vorbestimmter Anzahl von Frankiermaschinen-Transaktionsoperationen auftritt, die Mikrocomputer-Einrichtung zum Setzen einer Kennung veranlaßt, die das Frankiermaschinensystem solange vom weiteren Betrieb ausschließt, bis das Maschinensystem außer Betrieb genommen ist.

21. System nach Anspruch 17,
dadurch **gekennzeichnet,** daß die Registrierungen der Portogebühren-Transaktionsabrechnungen ein Feld für die Speicherung von Weichfehler-Zählerdaten oder von "Remapping"-Registrier-Zeigerdaten aufweist.

22. Frankiermaschinensystem nach Anspruch 2, weiter umfassend:
   - Speichermittel mit wahlfreiem Zugriff, die mit der Mikrocomputer-Einrichtung (104) verbunden sind, wobei die Programmspeichermittel so betreibbar sind, daß die Mikrocomputer-Einrichtung (104) einen vollständigen Satz kritischer Portogebührenabrechnungsdaten in den Speicher mit wahlreiem Zugriff, einen zweiten vollständigen Satz kritischer Abrechnungsdaten in mindestens eines der nichtflüchtigen Speichermittel (106, 108), und einen Satz abgekürzter kritischer Abrechnungsdaten in mindestens eines der nichtflüchtigen Speichermittel (106, 108) schreibt; und
   - die Speicherprogrammmittel weiter so betreibbar sind, daß sie die Mikrocomputer-Einrichtung (104) zum Wiedereinschreiben von Daten in die im nichtflüchtigen Speicher abgelegte vollständige Registrierung sowie in die im nichtflüchtigen Speicher abgelegte Registrierung der abgekürzten Daten veranlassen, wenn bei einem Datenvergleich ein Fehler in mindestens einem der Registrierungen des nichtflüchtigen Speichers entdeckt wird, wobei die Daten im Speicher für wahlfreien Zugriff als die exakten Bezugsdaten benutzt werden.

23. System nach Anspruch 22,
dadurch **gekennzeichnet,** daß der Vergleich zwischen dem kritischen Abrechnungsabschnitt der vollständigen Registrierung der Portogebühren-Transaktionsabrechnungen und den entsprechenden Daten im Speicher mit wahlfreiem Zugriff stattfindet.

24. System nach Anspruch 23,
dadurch **gekennzeichnet,** daß die kritischen Daten der Portogebühren-Transaktionsabrechnungen den Stückzählwert, das fallende Register und das steigende Register aufweisen.

25. System nach Anspruch 24,
dadurch **gekennzeichnet,** daß die kritischen Daten der Portogebühren-Transaktionsabrechnungen weiter den zyklischen Redundanztest für das fallende Register und das steigende Register aufweisen.

26. System nach Anspruch 25,
dadurch **gekennzeichnet,** daß ein Weichfehler-Zähler inkrementiert wird, wenn ein Fehler in den kritischen Abrechnungsdaten erfaßt wird und ein Wiedereinschreiben in die nichtflüchtigen Speichermittel mit Erfolg stattgefunden hat.

27. System nach Anspruch 17 oder 22,
dadurch **gekennzeichnet,** daß der nichtflüchtige Speicher so organisiert ist, daß eine vorbestimmte Anzahl von Registrierplätzen als Plätze für die vollständige Registrierung und für das abgekürzte Verzeichnis der Daten reserviert ist, und wobei im Falle, daß ein primärer Registrier-Platzfehler bei den vollständigen Daten oder den abgekürzten Daten auftritt, die Mikrocomputer-Einrichtung (104) unbenutzte Reserve-Registrierplätze aktiviert, die in Verbindung mit einem "Remapping"-Registrierzeiger die unbenutzten Reserveregistrierplätze veranlaßt, die Funktion der primären Registrierplätze zu übernehmen.

**28.** System nach Anspruch 27,
dadurch **gekennzeichnet,** daß die Mikrocomputer-Einrichtung (104) eine Kennung mit der Wirkung setzen kann, daß das Frankiermaschinensystem betriebsunfähig wird, wenn die vorbestimmte Anzahl sekundärer Speicherplätze benutzt worden ist.

FIG. 1

TO CONTROL MODULE MICRO

SERIAL CHANNELS

OPT ISO — 110

116

OPT ISO

TO INTERPOSER CONTROL

ACCOUNTING MICRO

104

112

OPT ISO

TO PRINTER MICRO

OPT ISO

POWER FAIL

114

108 EEPROM NVM

PWR CONT

120 TEMP SENSOR

106 EAROM NVM

118

EAROM POWER

100

102

EP 0 222 197 B1

FIG.2d

FIG.2c

FIG.2f

FIG.2b

FIG.2e

FIG.2a

FIG. 2

**FIG. 2**

# FIG. 2a

# FIG. 2b

# FIG. 2c

EP 0 222 197 B1

# FIG. 2d

# FIG. 2e

# FIG. 2f

FIG. 3a

FIG. 3b

# FIG. 3

FIG. 7a

FIG. 7b

# FIG. 7

ACCOUNTING MODULE MAIN LINE LOOP

SET 'CNTXFL' FLAG
TO SEND METER STATUS

ENSURE PROPER STACK PTR.
REGISTER BANK. MEMORY
PORT & INTERRUPT SETUP

UPDATE NVM OPEN BLOCK
SWITCH NORMAL/SERVICE
BLOCK IF NEEDED
"NVMCHG"

UPDATE METER STATUS
FROM CURRENT POSTAGE
VALUE "POSUPD"

INTERPOSER CONTROL
DISABLE OR ENABLE METER
ACCORDING TO 'STATE'
AND METER STATUS

CNTXFL
FLAG SET
?

Y

CLEAR FLAG THEN
SEND OUT METER
STATUS

N

CONTROL
MESSAGE
RECEIVED
?

Y

CLEAR
FLAG

N

DECODE & PROCESS
INCOMING COMMAND
"CMD_PROC"

IS
METER FATAL
?

Y

N

4X     5X     CX
COMMANDS

PRINTER
RTS
?

Y

FIG. 3a

RECEIVE CONTROL MESSAGE

Y — CONTROL RTS ?

N

RECEIVE & PROCESS POINTER STATUS "RECSTS"

"DOTRIP" WRITE 2 TRIP RECORDS TO NVM & SET TRIPFL FLAG

VERIFY/REWRITE TRIP RECORDS "VERIFY"

CLEAR FLAG — Y — TRIPFL FLAG SET ?

Y — IS METER FATAL ?

N

DO PARTIAL CHECKSUM FOR 256 BYTES OF PROGRAM CODE "CHKSM"

N — 16 PAGES COMPLETED ?

Y

SEND STATUS REQUEST TO PRINTER

FIG. 3b

EP 0 222 197 B1

# FIG. 4

START "DOTRIP"

CLOSE CURRENT TRANSACTION RECORD

UPDATE ACCOUNTING IN MICRO RAM "DOACCT"

WRITE PIECE COUNT. DSC REG. AND ITS CRC TO NEW TRANSACTION RECORD IN NVM

UPDATE EFFECT OF CURRENT POSTAGE VALUE "POSUPD"

LEAVE METER ENABLED ? — N → ISSUE DISABLE SIGNAL

SEND ACCOUNTING COMPLETE MESSAGE TO PRINTER

WRITE ASC REG., ITS CRC AND ACCUMULATED CRC TO TRANSACTION RECORD

PRINTER RTS ? — Y → RECEIVE & PROCESS STATUS

WRITE POSTAGE & BATCH VALUES TO TRANSACTION RECORD

SETUP POINTER TO BACKUP TRIP RECORD IN NVM

PRINTER RTS ? — Y → RECEIVE & PROCESS STATUS

MORE BYTES TO WRITE ? — Y → WRITE I BYTE TO BACKUP TRIP RECORD

MORE BYTES TO WRITE ? — Y

TRIP COMPLETE ? — N

APPEND PRINTER STATUS AND DATA STRING CRC TO CURRENT TRANSACTION RECORD

CHECK TIMING, HOME POSITION TRANSITION, CONTROL SUM FAILURE FLAG AND BRANCH TO FATAL ERROR IF NOT O.K.

SET TRIP FLAG TO REQUEST TRIP RECORD VERIFICATION

SEND TRIP COMPLETE MESSAGE TO CONTROL UNIT

MAIN LINE LOOP

38

FIG. 5

39

START
"PWRDN"

STOP TIMER AND ENSURE
INTERRUPTS ARE DISABLED

WRITE POWER DOWN BLOCK
DATA TO BOTH SEEQ AND
ER3400 "NVMWR"

TURN OFF POWER TO
ER3400 NVM

TURN ON CONNECTION
BETWEEN POWER FAIL
AND RESET CIRCUIT
TO RESET MICRO

RESET

# FIG. 6

# FIG. 7a

"LD_ NORMAL"

LOAD CURRENT ER3400 NORMAL BLOCK DATA TO TEMPORARY RAM "NVMRD"

BLOCK UNIQUELY FOUND ? — N

Y

CLEAR FØ_ ER34 FLAG

BLOCK CRC GOOD ? — N

Y

REGISTERS O.K. ? — N

Y

CLEAR FØ_FAIL FLAG

COPY DATA FROM TEMP BUFFER TO NORMAL BLOCK DATA AREA

LOAD CURRENT SEEQ NORMAL BLOCK DATA TO TEMPORARY RAM "SEEQ_READ"

BLOCK UNIQUELY FOUND ? — N

Y

CLEAR FØ_SEEQ FLAG

DATA FROM ER3400 O.K. ? — Y

N

SEEQ CRC GOOD ? — N

Y

REGISTERS O.K. ? — Y

N

CLEAR FO_FAIL FLAG

FOUND BAD ER3400 BLOCK ?

COPY DATA FROM TEMP BUFFER TO NORMAL BLOCK DATA AREA

FIND AND READ CURRENT TRIP RECORD DATA INTO TEMP RAM BUFFER "TRIP_READ"

41

# FIG. 7b

FIG. 8

EP 0 222 197 B1

# FIG. 10

**"GET_TRIPREC"**

**"GETØ_TRIP"**

LOAD RIGHT MOST BYTE OF PIECE COUNT

COMPUTE TRIP RECORD ADDR FROM LOW ORDER 5 BITS "TRIPREC_ADDR"

READ HIGH ORDER 6 BITS OF BYTE Ø

IS REMAP FLAG ON ?  —N→

Y

COMPUTE REMAPPED TRIP RECORD ADDR FROM LOW ORDER 2 BITS OF BYTE Ø

ADVANCE DATA POINTER TO BYTE 1 (CLOSING COUNTER)

**RETURN**

## FIG. 9

**"TRIP_FIND"**

INITIALIZE SEARCH LOOP COUNTER TO 2Ø, LOGICAL RECORD NO. TO Ø MATCHING COUNTER TO −1

GET PHYSICAL RECORD ADDR OF THIS LOGICAL RECORD NO. "GETØ_TRIP"

READ CLOSING COUNTER AND LEAST SIGNIFICANT 2 DIGITS OF THE PIECE COUNT IN THIS RECORD

ARE THEY EQUAL ?  —Y→

N

LOW ORDER 5 BITS EQUAL ?  —N→

Y

INCREMENT MATCH COUNTER SAVE LOGICAL RECORD NO.

INCREMENT LOGICAL RECORD NUMBER IN BCD DECREMENT LOOP COUNTER

LOOP COUNTER=0 ?  —N→

Y

LOAD MATCH COUNTER

**RETURN**

44

"TRIP1_RD"

FIND CURRENT TRIP
RECORD NUMBER
"TRIP_FIND"

IS
RECORD
UNIQUELY FOUND
?

N

Y

LOOP TO READ PIECE COUNT,
CRC OF DSC, DSC, CRC OF ASC,
ASC INTO TEMP RAM AND
ACCUMULATE DATA STRING CRC

LOAD THE DIFFERENCE
BETWEEN COMPUTED CRC
AND STORED CRC

RETURN

## FIG. 11

"POS_FIND"

INITIALIZE
POS_PTR = -1
LOOP COUNTER R2 = 4

INCREMENT POS_PTR

SET DATA POINTER
TO COUNTER 1 OF RECORD
# POS_PTR

READ COUNTER 1 &
COUNTER 2 AND SAVE
COUNTER 2 IN R1

BOTH
COUNTERS
EQUAL
?

N

Y

DECREMENT LOOP
COUNTER R2

A=0
SEARCH
SUCCESSFUL

R2 = 0 ?

A=0,
SEARCH
FAILED

RETURN

## FIG. 15

45



EP 0 222 197 B1

# FIG. 12

START "VERIFY"

CHECK/REWRITE CLOSING COUNTER OF PREVIOUS TRANSACTION RECORD

2nd COMPARE FAILED ? — Y → ERR 25

N

VERIFY/REWRITE CRITICAL DATA OF CURRENT PRIMARY TRIP RECORD

LOG SOFT ERROR OR REMAP IF HARD ERROR "ERRLOG" → ERR 25

VERIFY/REWRITE DATA IN CURRENT BACKUP TRIP RECORD

LOG SOFT ERROR OR REMAP IF HARD ERROR "ERRLOG" → ERR 25

HARD ERROR DETECTED BY ERRLOG ?

Y — WRITE REMAPPED TRIP RECORDS & SET TRIP FLAG "TRIP_WRITE"

N

VERIFY/REWRITE UN-UPDATED CLOSING COUNTER OF CURRENT TRANSACTION RECORD

TRIP FLAG SET ? — Y → CLEAR TRIP FLAG "TRIPFL"

N

PREVENT ANOTHER VERIFY

ERR 25

HARD ERROR ON THIS CLOSING COUNTER ? — Y → ERR 25

N

RETURN

46

FIG. 13

CLOSE PREVIOUS POSTAGE
SETTING RECORD

COUNTER 1

SEND SET POSTAGE COMMAND
WITH POSTAGE VALUE
TO PRINTER

END OF
POWER UP

WRITE POSTAGE VALUE &
THE RECORD CRC TO THE
CURRENT POSTAGE RECORD
"POS_WRITE"

RECEIVE PRINTER MESSAGE

81
HEADER
?

N → PROCESS RECEIVED
PRINTER STATUS
"DOSTAT"

Y

MASK OFF POSTAGE SETTING
UNKNOWN FLAG.

COMPARE REPLIED POSTAGE
VALUE VS STORED POSTAGE VALUE

EQUAL
?

N → ERROR 1

Y

WRITE POSTAGE RECORD
POINTER TO "OPEN"
CURRENT POSTAGE RECORD
"POSREC_OPEN"

COUNTER 2

CLEAR DISABLE FLAG IN 'STATE'
SET FLAG TO SEND METER STATUS

MAIN LINE LOOP

FIG. 14

48

# FIG. 16

"REPAIR_TRIPREC"

INITIALIZE
LOOP COUNTER TO 2Ø,
TRIP RECORD INDEX TO PIECE
COUNT − 20 MODULO 100 BCD

GET THE PHYSICAL RECORD
ASSOCIATED WITH THIS INDEX

VERIFY/REWRITE HEADER
(OR CLOSING COUNTER) TO BE
EQUAL TO THE INDEX

REWRITE FAILS ? — Y → ERROR 25

N

VERIFY/REWRITE LEAST SIGNIFICANT BYTE
OF PIECE COUNT IN THIS RECORD TO BE
EQUAL TO THE INDEX

REWRITE FAILS ? — Y → ERROR 25

N

INCREMENT INDEX IN BCD
DECREMENT LOOP COUNTER

N ← LOOP COUNTER ZERO ?

Y

WRITE CURRENT PRIMARY & BACKUP TRIP
RECORDS WITH CURRENT ACCOUNT
"TRIP_WRITE"

RETURN

49

EP 0 222 197 B1

# FIG. 17

```
        ("NVM_OPEN")
             |
             v
   ┌─────────────────────────┐
   │ UPDATE BACKUP SERVICE BLOCK │
   │ IN SEEQ NVM "UPD_SERVICE" │
   └─────────────────────────┘
             |
             v
   ┌─────────────────────────┐
   │ ERASE NEXT ER3400 BLOCK AND │
   │ WRITE 'AA' TO SEEQ BLOCK HEADER │
   │        "NVMER" │
   └─────────────────────────┘
             |
             v
         SUCCESS ? ──N──> ┌──────────────┐
             |             │ LOG BAD ERASE │
             Y             │ ERROR COUNTER │
             |             │ IN SEEQ │
             |             │ "LOG FATAL" │
             |             └──────────────┘
             |                    |
             |                    v
             |             ┌──────────────┐
             |             │ TRY TO ERASE │
             |             │ AGAIN │
             |             │ "NVMER" │
             |             └──────────────┘
             |                    |
             |                    v
             |                SUCCESS ? ──N──> ERROR 16
             |                    Y
             |                    |
             v                    |
   ┌─────────────────────────┐    |
   │ SETUP REGISTERS POINTING TO OLD │
   │ BLOCK HEADERS IN SEEQ & ER3400 │
   └─────────────────────────┘
             |
             v
   ┌─────────────────────────┐
   │ WRITE ØØ OR Ø1 HEADER TO │
   │ DEACTIVATE OLD SEEQ BLOCK │
   │ WITHOUT WAIT │
   └─────────────────────────┘
             |
             v
   ┌─────────────────────────┐
   │ WRITE ØØ OR Ø1 HEADER TO │
   │ DE-ACTIVATE OLD ER3400 BLOCK │
   └─────────────────────────┘
```

```
         ER3400 HDR ACTIVE ? ──Y──> ERROR 16
             N
             |
             v
         SEEQ HDR O.K. ? ──N──> ERROR 16
             Y
             |
             v
   ┌──────────────────┐
   │ SEARCH ER3400 │
   │ ACTIVE HEADERS │
   └──────────────────┘
             |
             v
      N ──── MORE ? ──── Y
      |
      v
   ┌──────────────────┐
   │ REMOVE WRITE │
   │ PROTECT FLAG IN │
   │ 'NVMBLK' │
   └──────────────────┘
             |
             v
         ( RETURN )
```

50

## FIG. 18

("NVMCHG")

IS 'STATE' FATAL OR IN SERVICE MODE ?

N → MAKE NEW ACTIVE NVM BLOCK TYPE NORMAL

Y → MAKE NEW ACTIVE NVM BLOCK TYPE SERVICE

IS THERE CHANGE IN NVM BLOCK TYPE ?

N →

Y → DISABLE INTERRUPT

WRITE CURRENT NVM TYPE DATA TO OPEN BLOCKS IN SEEQ AND ER3400 "NVMWR"

ENABLE INTERRUPT

NO WRITE ERROR ?

Y →

N → WRITE PROTECT ?

Y →

N → "NVMWR"

ERROR ? → ERROR 16

N → "NVM_OPEN"

(RETURN)

51